# EUROPEAN PATENT SPECIFICATION

(11) **EP 1 389 270 B1**
(45) Date of publication and mention of the grant of the patent: **03.05.2006**
(21) Application number: 02737034.5
(22) Date of filing: 22.05.2002
(51) Int. Cl.: F02D 13/04, F01L 9/02, F02D 9/06, B60T 8/36, F02D 23/00, F01L 13/06

(54) **METHOD AND SYSTEM FOR ENGINE BRAKING IN AN INTERNAL COMBUSTION ENGINE**
VERFAHREN UND SYSTEM ZUR MOTORBREMSUNG IN EINEM VERBRENNUNGSMOTOR
PROCEDE ET SYSTEME DE FREINAGE MOTEUR DANS UN MOTEUR A COMBUSTION INTERNE

(30) Priority: 22.05.2001 US 292319 P; 24.09.2001 US 960386; 21.03.2002 US 101629
(43) Date of publication of application: 18.02.2004
(73) Proprietor: Jacobs Vehicle Systems, Inc., Bloomfield, CT 06002 (US)
(72) Inventor: YANG, Zhou, South Windsor, CT 06074 (US); FUCHS, Neil, New Hartford, CT 06057 (US); RUGGIERO, Brian, East Granby, CT 06026 (US)
(74) Representative: Grünecker, Kinkeldey, Stockmair & Schwanhäusser Anwaltssozietät
(86) International application number: PCT/US2002/016020
(87) International publication number: WO 2002/095203

(56) References cited:
- EP-A- 0 984 140
- US-A- 4 395 884
- US-A- 4 793 307
- US-A- 4 932 372
- US-A- 5 410 882
- US-A- 5 813 231
- US-A- 6 000 374
- US-A- 6 148 793
- US-A- 6 155 049
- US-B1- 6 220 032
- US-B1- 6 223 846

## Description

### FIELD OF THE INVENTION

The present invention relates generally to a system and method for engine braking in internal combustion engines. In particular, the present invention relates to an engine braking system and method for producing main, compression-release, bleeder, exhaust gas recirculation, and/or other auxiliary engine valve events.

### BACKGROUND OF THE INVENTION

Flow control of exhaust gas through an internal combustion engine has been used in order to provide vehicle engine braking. Generally, engine braking systems may control the flow of exhaust gas to incorporate the principles of compression-release type braking, exhaust gas necircutation, exhaust pressure regulation, and/or bleeder type braking.

The operation of a compression-release type engine brake, or retarder, is well known. During engine braking, the exhaust valves may be selectively opened to convert, at least temporarily, a power producing internal combustion engine into a power absorbing air compressor. As a piston travels upward during its compression stroke, the gases that are trapped in the cylinder are compressed. The compressed gases oppose the upward motion of the piston. During engine braking operation, as the piston approaches the top dead center (TDC), at least one exhaust valve is opened to release the compressed gases in the cylinder to the exhaust manifold, preventing the energy stored in the compressed gases from being returned to the engine on the subsequent expansion down-stroke. In doing so, the engine develops retarding power to help slow the vehicle down. An example of a prior art compression release engine brake is provided by the disclosure of the Cummins, U.S. Pat. No. 3,220,392 (November 1965), which is hereby incorporated by reference.

The principles of exhaust gas recirculation (EGR) are also well known. An EGR system allows a portion of the exhaust gases to flow back into the engine cylinder and is primarily used to reduce the amount of NOₓ created by the engine during positive power operations. An EGR system can also be used to control the pressure and temperature in the exhaust manifold and engine cylinder during engine braking cycles. Generally, there are two types of EGR systems, internal and external. External EGR systems recirculate exhaust gases back into the engine cylinder through an intake valve(s). Internal EGR systems recirculate exhaust gases back into the engine cylinder through an exhaust valve(s).

Furthermore, control of EGR may be achieved by selectively varying the levels of exhaust back pressure using Exhaust Pressure Regulation (EPR). By controlling EGR with EPR, the levels of pressure and temperature in the exhaust manifold and engine cylinders may be maintained such that optimal degrees of engine braking are attained at any engine speed. An example of a method and system for optimizing engine braking using EGR and EPR is provided by the disclosure of Israel, U.S. Pat. No. 6,170,474 (Jan. 9,2001) for Method and System For Controlled Exhaust Gas Recirculation in an Internal Combustion Engine With Application to Retarding and Powering Function, which is hereby incorporated by reference.

The operation of a bleeder type engine brake has also long been known. During engine braking, in addition to the normal exhaust valve lift, the exhaust valve(s) may be held slightly open continuously throughout the remaining engine cycle (full-cycle bleeder brake) or during a portion of the cycle (partial-cycle bleeder brake). The primary difference between a partial-cycle bleeder brake and a full-cycle bleeder brake is that the former does not have exhaust valve lift during most of the intake stroke.

Usually, the initial opening of the braking valve(s) in a bleeder braking operation is far in advance of the compression TDC (i.e., early valve actuation) and then lift is held constant for a period of time. As such, a bleeder type engine brake requires much lower force to actuate the valve(s) due to early valve actuation, and generates less noise due to continuous bleeding instead of the rapid blow-down of a compression-release type brake. Moreover, bleeder brakes often require fewer components and can be manufactured at lower cost. Thus, an engine bleeder brake can have significant advantages.

Despite these advantages, however, bleeder type engine brakes have not been widely used because they typically produce less braking power than the compression-release type brakes in heavy duty diesel engines with a conventional fixed geometry turbocharger (FGT). This reduced braking power occurs especially at low and moderate engine speeds.

With the introduction of variable geometry turbochargers (VGT), however, bleeder brakes become a more attractive option. Through the use of VGT, both the intake and exhaust manifold pressures may be much higher than those produced using conventional FGT. These increased pressures may correspond to greatly improved bleeder brake performance, especially at low and moderate engine speeds.

The prior art methods and systems do not disdose incorporating VGT to improve bleeder braking performance. For example, Faletti et al., U.S. Pat. No. 6,148,793 (Nov. 21, 2000), discloses a compression-release type braking system utilizing a variable geometry turbocharger, but does not disclose a bleeder braking system using VGT for optimizing engine braking. Similarly, Church et al., U.S. Pat No. 6,134,890 (Oct. 24, 2000), discloses a method for controlling VGT for providing precise control of turbo boost pressure. The >890 patent does not, however, disclose a system and method utilizing VGT to control exhaust back pressure for improving bleeder braking performance.

Also, Price et al., U.S. Pat. Nos. 4,395,884 (Aug. 2,1983) and 4,474,006 (Oct. 2,1984), disclose principles similar to those of a variable geometry turbo to control engine braking, but do not disclose methods and systems of engine bleeder braking using VGT. In addition. A. Flotho et al., New Engine Brake Systems for Commercial Vehicles (1999), which is hereby incorporated by reference, discloses a two-stage turbocharger adapted to enhance engine braking, but the geometry of the turbocharger is not variable.

Accordingly, there is a significant need for a method and system for engine braking in an internal combustion engine with VGT that captures the inherent advantages of bleeder braking operation and provides improved bleeder braking performance.

Current variable geometry turbochargers typically include a mechanical stop that prevents the geometry (vanes) of the VGT from fully dosing. This is so because, once the vanes are fully closed, the significant pressure gradient across the VGT creates control instability and prevents the vanes from being re-opened. The mechanical stop of most VGTs is based on optimum engine positive power operation, and is usually not optimum for engine braking. This means that the increased exhaust manifold pressures created below this position, and, thus, opportunities for improved engine braking, may be forfeited.

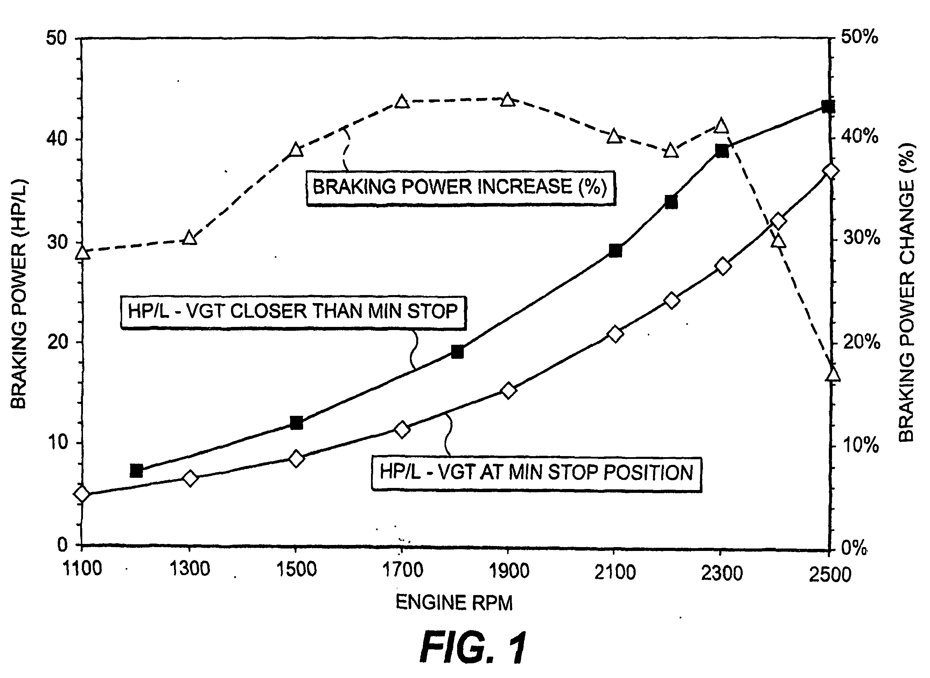

None of the prior art methods and systems teach or suggest minimizing the pressure gradient across the VGT to avoid control instability and maximize the VGT geometry variation range. Accordingly, there is an additional need for a method and system for controlling engine braking in an internal combustion engine with VGT that captures the advantages of bleeder braking operation but eliminates or reduces the limitations caused by the mechanical stop features of conventional variable geometry turbochargers. Fig. 1 illustrates an example of a comparison between improved bleeder brake performance results in a full-cycle bleeder braking system with VGT according to the present invention obtained by the present Assignee and performance using conventional VGTs with the mechanical stop limitation.

In addition, the braking performance of a bleeder braking system can be further optimized by using EGR and EPR to tune exhaust back pressure. By combining EGR and EPR with fully operational VGT, the levels of pressure and temperature in the exhaust manifold and engine cylinders may be maintained such that optimal degrees of engine braking are attained at any engine speed. None of the prior art systems and methods, of which the present inventors are aware, teach or suggest this combination.

The systems and methods of the present invention according to claims 1 and 28 respond to the needs left unanswered by the prior art. The present invention provides systems and methods for improving bleeder brake performance using any combination of turbocharger control, EGR, and EPR. The present invention further provides systems and methods for eliminating or reducing the limitations caused by the mechanical stop features of conventional VGT so that the VGT variation range may be extended for wider application in both engine braking and positive power operations. In addition, the present invention provides improved mechanisms and devices to achieve a bleeder braking cycle.

It is, therefore, an object of the present invention to overcome the shortcomings present in known engine bleeder braking systems and methods.

It is an object of the present invention to improve performance of an engine braking system using turbocharger control.

It is another object of the present invention to improve performance of a bleeder brake system using VGT.

Another object of the present invention is to control the pressure gradient across a VGT turbine in order to avoid VGT control instability problems.

It is another object of the present invention to move the minimum hard stop in VGTs to a more closed position or eliminate the minimum hard stop altogether such that the VGT variation range may be extended for a wider application in both engine braking and positive power operations.

It is another object of the present invention to control the exhaust manifold pressure using a combination of VGT, pressure regulation valve(s), and/or a bleeder brake.

It is another object of the present invention to control the exhaust manifold temperature using a combination of VGT, pressure regulation valve(s), and/or a bleeder brake.

It is yet another object of the present invention to initialize a bleeder brake event with valve float (valve separating from its seat) controlled by EPR.

Another object of the present invention is to control EGR using EPR, VGT, and/or a bleeder brake.

Still another object of the present invention is to optimize bleeder braking performance at all engine speeds, especially at low and moderate engine speeds, without exceeding engine operating limits at high engine speeds.

It is another object of the present invention to provide an engine braking system that generates less noises than known engine braking systems.

Another object of the present invention is to provide an engine system that reduces the amount of NOₓ created by the engine.

Another object of the present invention is to provide a control method and system for engine bleeder braking using EGR, EPR, and VGT control.

Yet another object of the present invention is to provide various valve actuation subsystems for use in a bleeder brake engine braking system.

It is another object of the present invention to provide an engine braking assembly that uses high-pressure fluid to actuate at least one engine valve during an engine braking event.

Another object of the present invention is to provide a bleeder brake system using a high-pressure bleeder brake assembly.

Additional objects and advantages of the present invention are set forth, in part, in the description which follows, and, In part, will be apparent to one of ordinary skill in the art from the description and/or from the practice of the invention.

The present inve on is directed to a method and a system of controlling a bleeder braking event in an engine according to claims 1 or 28. The engine braking assembly comprises an engine housing, having a hydraulic circuit formed therein; a high-pressure fluid source adapted to store high-pressure fluid therein; valve means for controlling the flow of the high-pressure fluid, in communication with the high-pressure fluid source through the hydraulic circuit; control means for selectively controlling the valve means; and a valve actuation assembly in communication with the valve means through the hydraulic circuit, wherein the valve actuation assembly receives the high-pressure fluid through the valve means and wherein the hydraulic force created by the high-pressure fluid actuates and holds open the at least one engine valve to produce the bleeder braking event.

In accordance with the present invention, the valve actuation assembly may include a piston housing secured on the engine housing; a piston adapted to move within the piston housing, wherein the hydraulic force created by the high-pressure fluid causes the piston to actuate and hold open the at least one engine valve during the braking event; and a return spring, having a first end secured to the piston housing and a second end secured to the piston. The return spring biases the piston away from the at least one engine valve when the braking event is disabled.

In accordance with the present invention, the engine braking assembly may further include means for regulating the pressure of at least one of the intake and exhaust manifolds and creating a force differential across the at least one engine valve. The pressure regulating means may include: a turbocharger connected to the intake and exhaust manifolds, wherein the turbocharger is adapted to change the flow of exhaust gases through the turbocharger, and a pressure regulation valve coupled to at least one of the intake and exhaust manifolds.

The method for controlling a bleeder braking event in an engine having at least one engine valve, at least one engine cylinder, and intake and exhaust manifolds may include the steps of: supplying high-pressure fluid from a high-pressure fluid source to a valve assembly; selectively activating the valve assembly to communicate the high-pressure fluid to a valve actuation assembly; actuating and holding open the at least one engine valve with the hydraulic force created by the high-pressure fluid communicated to the valve actuation assembly to create the bleeder braking event; and releasing the high-pressure fluid when the bleeder braking event is disabled.

It is to be understood that both the foregoing general description and the following detailed description are exemplary and explanatory only, and are not restrictive of the invention as claimed. The accompanying drawings, which are Incorporated herein by reference, and which constitute a part of this specification, illustrate certain embodiments of the invention and, together with the detailed description, serve to explain the principles of the present invention.

### BRIEF DESCRIPTION OF THE DRAWINGS

The present invention will now be described in connection with the following figures in which like reference numbers refer to like elements and wherein:

Fig. 1 is a graph illustrating a comparison between improved bleeder brake performance according to the present invention and performance by a braking system using conventional VGT with a mechanical stop limitation;

Fig. 2 is a schematic diagram illustrating the general relationship of the engine braking components according to the present invention;

Fig. 3 is a schematic diagram illustrating exhaust pressure regulation according to a first embodiment of the present invention;

Fig. 4 is a schematic diagram illustrating exhaust pressure regulation according to a second embodiment of the present invention;

Fig. 5 is a schematic diagram illustrating exhaust pressure regulation according to a third embodiment of the present invention;

Fig. 6 is a schematic diagram illustrating exhaust pressure regulation according to a fourth embodiment of the present invention;

Fig. 7 is a schematic diagram illustrating exhaust pressure regulation according to a fifth embodiment of the present invention;

Fig. 8 is a block diagram illustrating a method for controlling an engine braking system according to one embodiment of the present invention;

Fig. 9 is a graph illustrating the variation of braking power with engine speed for a full-cycle bleeder braking system;

Fig. 10 illustrates a control map depicting the exhaust manifold pressure (Pexh) as a function of engine speed (ERPM) speed and VGT geometry;

Fig.11 is a graph illustrating the forces required to open and close a VGT with moving vanes at various engine speeds as a function of VGT geometry position prior to the present invention;

Fig. 12 illustrates exhaust manifold pressure as a function of VGT geometry for a fixed engine speed in a braking system;

Fig. 13 is a pressure-volume graph illustrating higher engine braking from increased pumping work according to an embodiment of the present invention;

Fig.14 is a control diagram illustrating VGT geometry setting as a function of engine speed according to an embodiment of the present invention;

Fig. 15 is a chart illustrating the various possible embodiments of the valve actuation system according to the present invention;

Fig. 16 illustrates a valve lift profile for at least one embodiment of the valve actuation subsystem of the present invention;

Fig. 17 illustrates a valve lift profile for at least one embodiment of the valve actuation subsystem of the present invention;

Fig. 18 illustrates a valve lift profile for at least one embodiment of the valve actuation subsystem of the present invention;

Fig. 19 illustrates a valve lift profile for at least one embodiment of the valve actuation subsystem of the present invention;

Fig. 20 is a schematic diagram of a valve actuation subsystem according to a first embodiment of the present invention;

Fig. 21 is a schematic diagram of a valve actuation subsystem according to a second embodiment of the present invention;

Fig. 22 is a graph illustrating the force differential required to float engine valve(s) according to one embodiment of the present invention;

Fig. 23 is a graph illustrating the force differential required to float engine valve(s) according to another embodiment of the present invention;

Fig. 24 is a schematic diagram of a valve actuation subsystem according to a third embodiment of the present invention;

Fig. 25 is a schematic diagram of a valve actuation subsystem according to a fourth embodiment of the present invention;

Fig. 26 illustrates a valve lift profile for at least one embodiment of the valve actuation subsystem of the present invention;

Fig. 27 is a schematic diagram of a valve actuation subsystem according to a fifth embodiment of the present invention;

Fig. 28 is a schematic diagram of a valve actuation subsystem according to a sixth embodiment of the present invention;

Fig. 29 is a schematic diagram of a valve actuation subsystem according to a seventh embodiment of the present invention;

Fig. 30 is a schematic diagram of a valve actuation subsystem according to an eighth embodiment of the present invention;

Fig. 31 is a schematic diagram of a valve actuation subsystem according to a ninth embodiment of the present invention;

Fig. 32 is a schematic diagram of a valve actuation subsystem according to a tenth embodiment of the present invention;

Fig. 33 is a schematic diagram of a valve actuation subsystem according to an eleventh embodiment of the present invention;

Fig. 34 is a schematic diagram of a valve actuation subsystem according to a twelfth embodiment of the present invention;

Fig. 35 is a schematic diagram of a valve actuation subsystem according to a thirteenth embodiment of the present invention;

Fig. 36 is a schematic diagram of a valve actuation subsystem according to a fourteenth embodiment of the present invention;

Fig. 37 is a schematic diagram of a valve actuation subsystem according to a fifteenth embodiment of the present invention;

Fig. 38 is a schematic diagram of a valve actuation subsystem according to a sixteenth embodiment of the present invention;

Fig. 39 is a schematic diagram of a valve actuation subsystem according to a seventeenth embodiment of the present invention;

Fig. 40 is a schematic diagram of a valve actuation subsystem according to a eighteenth embodiment of the present invention;

Fig. 41 is a schematic diagram of a valve actuation subsystem according to a nineteenth embodiment of the present invention;

Fig. 42 is a schematic diagram of a brake housing for a valve actuation subsystem according to an embodiment of the present invention;

Fig. 43 is a schematic diagram of a valve actuation subsystem according to a twentieth embodiment of the present invention;

Fig. 44 is a schematic diagram of a cam lobe profile according to one embodiment of the present invention;

Fig. 45 illustrates a valve lift profile for at least one embodiment of the valve actuation subsystem of the present invention;

Fig. 46 is a schematic diagram of a high-pressure supply valve assembly for at least one embodiment of the valve actuation subsystem of the present invention; and

Fig. 47 is a graph illustrating braking fluid pressure versus engine speed for actuating the valve actuation subsystem of the first embodiment of the present invention.

### DETAILED DESCRIPTION OF THE INVENTION

Reference will now be made in detail to a preferred embodiment of the engine system **10** of the present invention, an example of which is illustrated in the accompanying drawings.

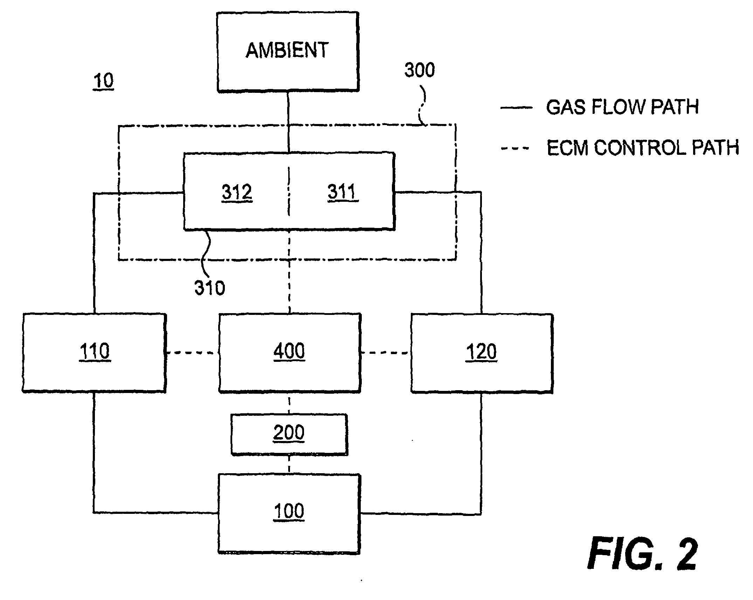

Fig. 2 illustrates the general relationship of engine components in the internal combustion engine system **10**. The engine system **10** includes an engine block **100** connected to an intake manifold **110** and an exhaust manifold **120**. The engine block **100** includes at least one intake and at least one exhaust valve (not shown). The engine system **10** further includes a valve actuation subsystem **200,** pressure regulation means **300**, a turbocharger **310**, and engine control means **400**.

The actuation of the exhaust valve and/or the intake valve of the present invention can be controlled as required by the valve actuation subsystem **200**. In the preferred embodiment of the present invention, the valve actuation subsystem **200** opens the at least one engine valve to produce a bleeder braking event. It is contemplated, however, that the valve actuation subsystem **200** may be used for producing main, compression-release, exhaust gas recirculation, and/or other auxiliary engine valve events. The actuation subsystem **200** may comprise various hydraulic, hydro-mechanical, pneumatic, electromagnetic, and/or other actuation means, which will be discussed in detail below.

As will be apparent to those of ordinary skill in the art, the turbocharger **310** includes a turbine **311** and a compressor **312**. The pressure from normally wasted engine exhaust gasses causes the turbine **311** to rotate. As the turbine **311** rotates, it drives the compressor **312** which is coupled to the turbine **311.** The rotating compressor **312** creates a high volume of air at increased pressure (turbo boost pressure) which develops increased power during combustion.

In the preferred embodiment of the present invention, the turbocharger **310** is a variable geometry turbocharger (VGT). A VGT has movable components (geometry) that can change the area of the turbocharger through which engine exhaust gases flow. !n the preferred embodiment of the present invention, the geometry of the turbocharger **310** is varied by changing the vane position, which generates a different air flow passage (or resistance) through which the exhaust gases flow. There are several known embodiments for a variable geometry turbocharger, such as, for example, the swing-vane type and the sliding-vane type, and it is contemplated that the present invention could use any of these and/or new VGTs developed by the Assignee or others. Other embodiments of the turbocharger **310**, including, but not limited to, a dual entry fixed geometry turbocharger (FGT) with a diverter mechanism, and/or any system or device which could control the flow area and/or direction of the exhaust gases, are considered well within the scope of the present invention.

The engine control means (ECM) **400** may control the valve actuation subsystem **200,** the turbocharger **310,** and the pressure regulation means **300** such that the desired level of engine braking is achieved and the level of pressure and/or temperature in the exhaust manifold **120** and/or the engine cylinder does not exceed predetermined limits dictated by the design and materials making up the components of the engine **100.** The ECM **400** may include a computer and may be connected to sensors through any connection means, such as electrical wiring or gas passageways, to the engine cylinder, the intake manifold **110**, the exhaust manifold **120**, or any other part of the engine system. The ECM **400** may also be connected to an appropriate engine component, such as a tachometer, capable of providing the ECM **400** with a measurement of engine speed and/or other engine parameters.

In general, the gas flow path of the engine system **10** is illustrated by the solid line shown in Fig. 2. During engine positive power cycles, intake air flows through the intake manifold **110** and enters the engine cylinder through the at least one intake valve during the intake stroke. The air is mixed with fuel in the engine cylinder and the mixture is used by the engine **100** to generate power. The combustion gases are then discharged from the engine **100** through the exhaust manifold **120**. The exhausted gases enter and drive the turbine **311** of the turbocharger **310,** which is coupled to the compressor **312.** The compressor **312** provides a high volume of air into the intake manifold **110** at increased pressure. The pressurized air is forced into the engine **100**, and because of the increased weight of the compressed air, more fuel can be scheduled to produce more horsepower from the engine. During engine braking cycles, the pressurized air through the compressor **312** of the turbocharger **310** increases the boost level. The increased boost pressure increases the retarding force against which engine pistons must work and, thus, the engine braking power.

It should be noted that the exhaust gases (air during braking) may flow back into the engine cylinder and/or intake manifold **110** from the exhaust manifold **120**. This process is called exhaust gas recirculation (EGR). As discussed above, EGR may be used to control engine emission (through NOₓ reduction) during engine power operation and to improve engine retarding during engine braking operation.

The pressure regulation means **300** may be provided by various means for regulating the pressure in the exhaust manifold **120**. The pressure regulation means **300** may be used to reduce the pressure drop across the turbine **311** of the turbocharger **310** when the VGT gap position needs to be opened from the fully closed position (or nearly fully closed position) without any mechanical control problems associated with re-opening it.

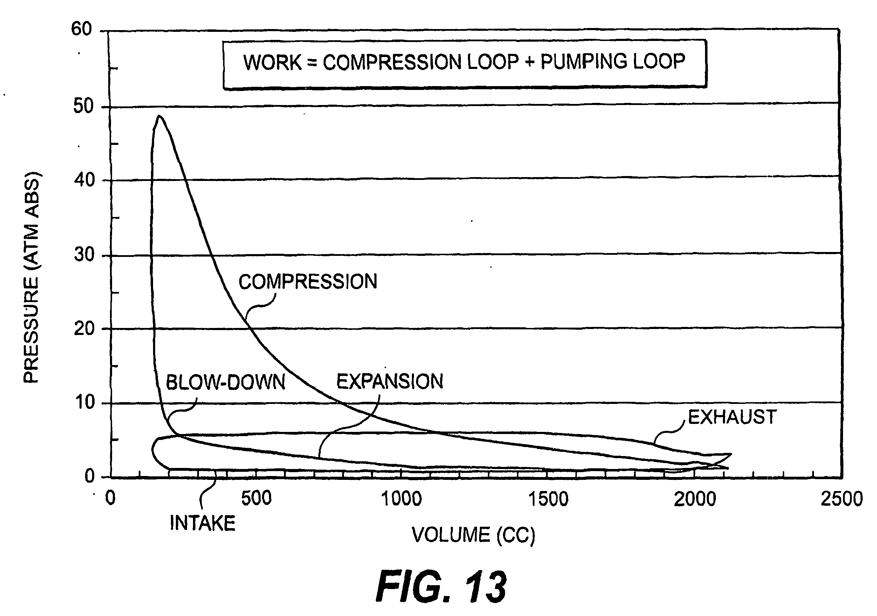

In addition, the pressure regulation means **300** may provide for optimum engine braking for all engine speeds by controlling the pressure and temperature in the exhaust manifold **120**, the turbo speed, and, thus, the intake boost pressure. The pressure in the exhaust manifold **120** is the most important parameter for a bleeder braking system, especially at moderate and low engine speeds when the intake boost pressure is low. Higher exhaust manifold pressure improves bleeder braking performance in two ways. First, the higher exhaust manifold pressure increases the pumping work during the exhaust and intake strokes. Fig. 13 is a pressure-volume graph illustrating higher engine braking from increased pumping work according to the present invention. Second, the higher pressure in the exhaust manifold **120** increases EGR to back charge the cylinder (exhaust boost) to generate higher compression release braking power.

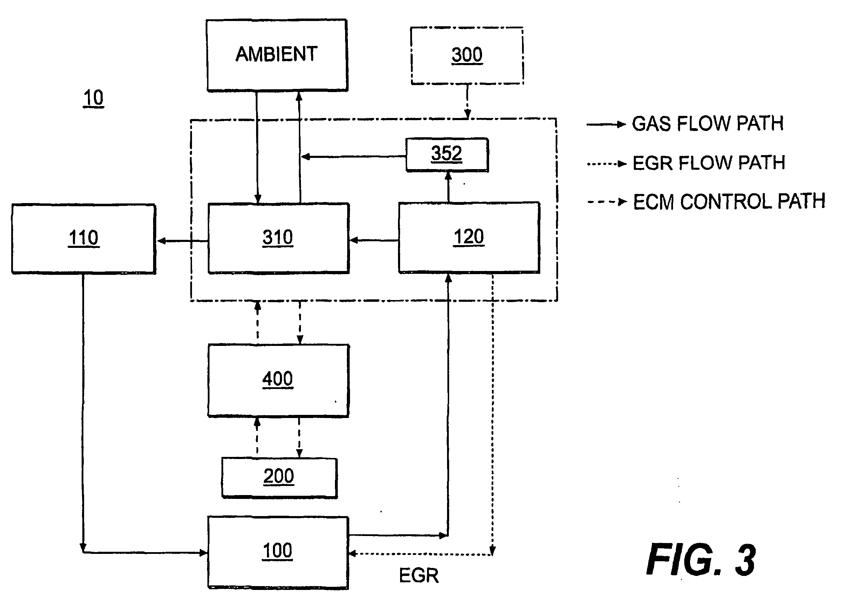

The various embodiments of the pressure regulation means **300** will now be described with reference to Figs. 3-7. In the preferred embodiment, the pressure regulation means **300** includes a pressure regulation valve **350**.

In one embodiment of the present invention, as shown in Fig. 3, the pressure regulation valve **350** is a waste gate **352** coupled to the exhaust manifold **120** and located before the turbine **311** portion of the turbocharger **310.** In this position, the waste gate **352** controls the pressure drop across the turbine **311** by changing the pressure upstream from the turbocharger **310** (i.e., the pressure in the exhaust manifold **120**). By opening the waste gate **352**, exhaust gases are allowed to bypass the turbocharger **310** and the pressure drop across the VGT can be controlled. In one embodiment of the present invention the waste gate **352** is a variable flow waste gate. As such, the ECM **400** may control the waste gate **352** to provide the required pressure drop across the turbine **311** to avoid VGT mechanical instability. In addition, the ECM **400** may control the waste gate **352** to provide a pressure level in the exhaust manifold **120** for optimum engine performance.

In addition to controlling the pressure drop across the turbine **311** to facilitate a wider VGT variation range, and, correspondingly, improved bleeder braking performance, the pressure regulation means **300** and/or the turbocharger **310** may provide for internal EGR through the at least one exhaust valve. During exhaust gas recirculation, exhausted gases (air during braking) from the exhaust manifold **120** flow back into the engine cylinder through the at least one exhaust valve. In this manner, the pressure and temperature of the exhaust manifold **120** and the engine cylinder may be controlled for better engine braking and/or lower NOₓ emission.

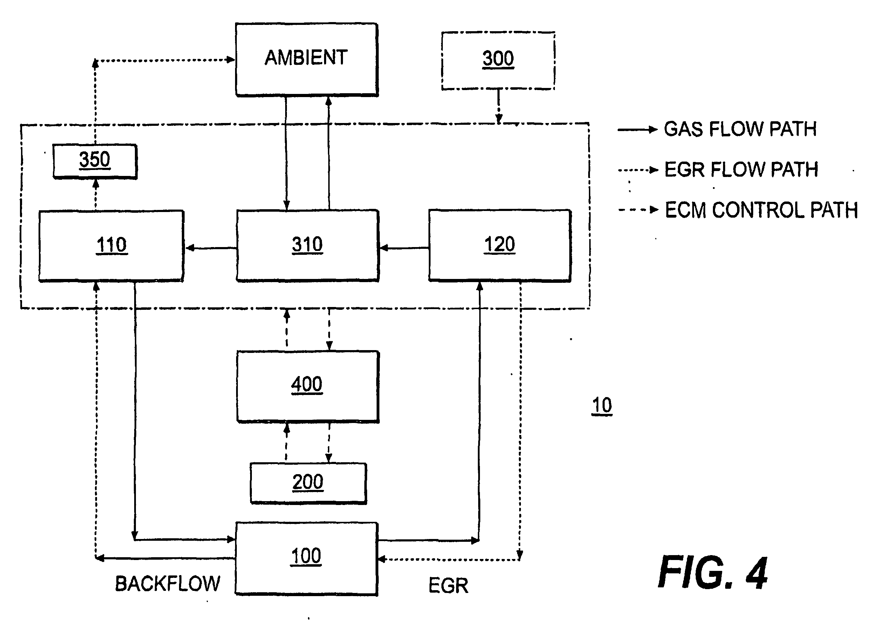

In another embodiment of the present invention, as shown in Fig. 4, the pressure regulation valve **350** is coupled to the intake manifold **110**. In this position, the pressure regulation valve **350** controls the pressure in the exhaust manifold **120**, and thus, the pressure drop across the turbine **311** by changing the pressure in the intake manifold **110**. The control of the pressure drop across the turbine **311** may be accomplished in two ways. First, because the pressure in the exhaust manifold **120** is coupled with the intake boost pressure through the turbocharger **310**, a lower boost pressure will lead to a lower turbo speed. This, in turn, leads to a lower pressure gradient across the turbine **311**.

Second, where the engine braking system **10** is a bleeder braking system, such as, for example, a full-cycle bleeder brake, the exhaust manifold **120** is in direct communication with the intake manifold **110** through engine valve overlap during the bleeder cycle. Engine valve overlap occurs when both the at least one intake valve and the at least one exhaust valve are open at the same time. By opening the pressure regulation valve **350**, the exhaust gases (air during braking) in the exhaust manifold **120** may flow back into the engine cylinder through the exhaust valve(s), and then into the intake manifold **110** through the intake valve(s). This back flow causes the pressure in the exhaust manifold **120**, and thus, the pressure gradient across the turbine **311**, to be reduced, leading to improved VGT control stability.

In addition, the pressure regulation valve **350** may provide for an internal EGR event through the intake bleeder. During exhaust gas recirculation, the exhausted gases (air during braking) from the exhaust manifold **120** flow back into the engine cylinder through the at least one exhaust valve. In this manner, the pressure and temperature of the exhaust manifold **120** and the engine cylinder may be controlled for better engine braking and/or lower NOₓ emission of the engine **100.**

Operation of the pressure regulation valve **350** in the intake manifold **110** has several additional advantages over prior known systems. Because the pressure regulation valve **350** is located in the intake manifold **110,** it is subjected to lower temperatures, and, thus, is less susceptible to durability problems. Moreover, because the pressure regulation valve **350** discharges directly to the ambient, the engine braking system **10** does not require additional manifold piping to bypass the turbocharger **310** and is simpler and less expensive to produce.

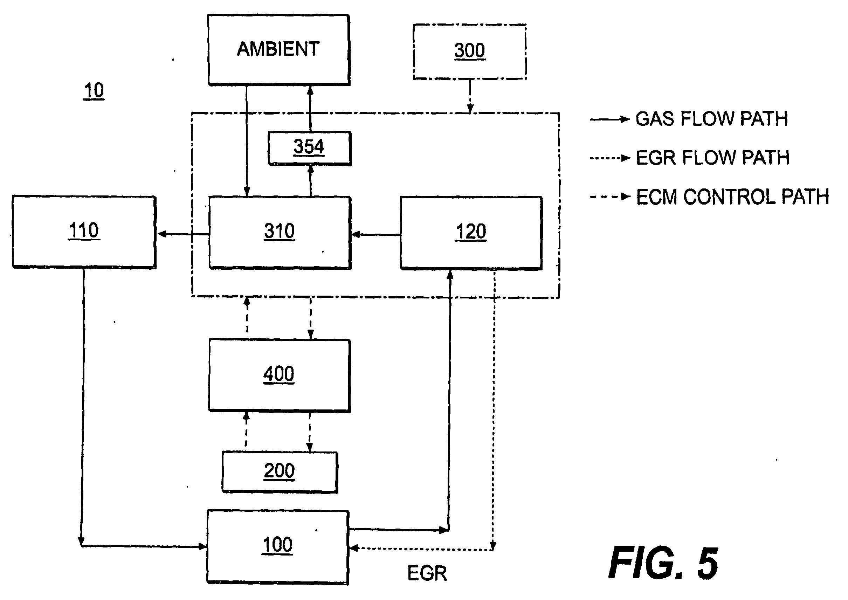

In another embodiment of the present invention, as shown in Fig. 5, the pressure regulation valve **350** is an exhaust restrictor **354** located after the turbine **311** portion of the turbocharger **310**. The exhaust restrictor **354** may be located, for example, in exhaust piping downstream of the turbine **311.** In this position, the exhaust restrictor **354** of the present invention controls the pressure drop across the turbine **311** by changing the pressure downstream from the turbocharger **310** (i.e., the exhaust exit back pressure). In one embodiment, the exhaust restrictor **354** is a controllable, variable-size exhaust brake. Other embodiments of the exhaust restrictor **354,** however, are considered well within the scope of the present invention.

In addition, the exhaust restrictor **354**, along with the turbocharger **310**, may provide for an internal EGR event. During exhaust gas recirculation, exhausted gases (air during braking) from the exhaust manifold **120** flow back into the engine cylinder through the at least one exhaust valve. In this manner, the pressure and temperature of the exhaust manifold **120** and the engine cylinder may be controlled for better engine braking and/or lower NOₓ emission of the engine **100**.

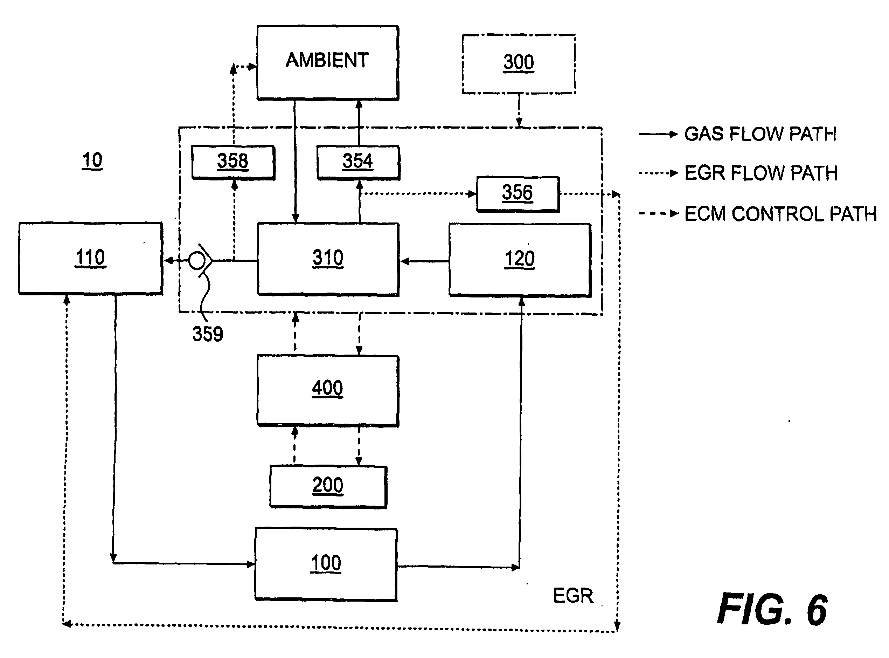

In another embodiment of the present invention, as shown in Fig. 6, a first pressure regulation valve **350** is an exhaust restrictor **354** located downstream of the turbine **311** portion of the turbocharger **310.** In this position, the exhaust restrictor **354** controls the pressure drop across the turbine **311** by changing the pressure downstream from the turbocharger **310** (i.e., exhaust exit back pressure). In addition, an EGR valve **356** placed downstream of the turbocharger **310** but upstream of the exhaust restrictor **354** provides a low-pressure-loop external EGR event such that hot braking gas can cool and flow back into the intake manifold **110** through an externally cooled EGR passage. The EGR valve **356** also prevents the turbocharger **311** from stalling, which would eliminate any intake boost.

Moreover, the exhaust restrictor **354** and the EGR valve **356** may be tuned for braking optimization (for different engine speeds or different braking levels). In addition, during positive power cycles, EGR optimization (for different engine speeds and loads) for emission reduction can be achieved by tuning the exhaust restrictor **354** and the EGR valve **356** (from fully open to fully closed) for different levels of EGR, turbo operation, and boost.
The pressure regulation means **300** may further include a second pressure regulation valve **358** downstream of the compressor **312** of the turbocharger **310** and a one-way check valve **359** located between the intake manifold **110** and the compressor **312** to control back flow due to EGR and prevent compressor problems, such as compressor surge.

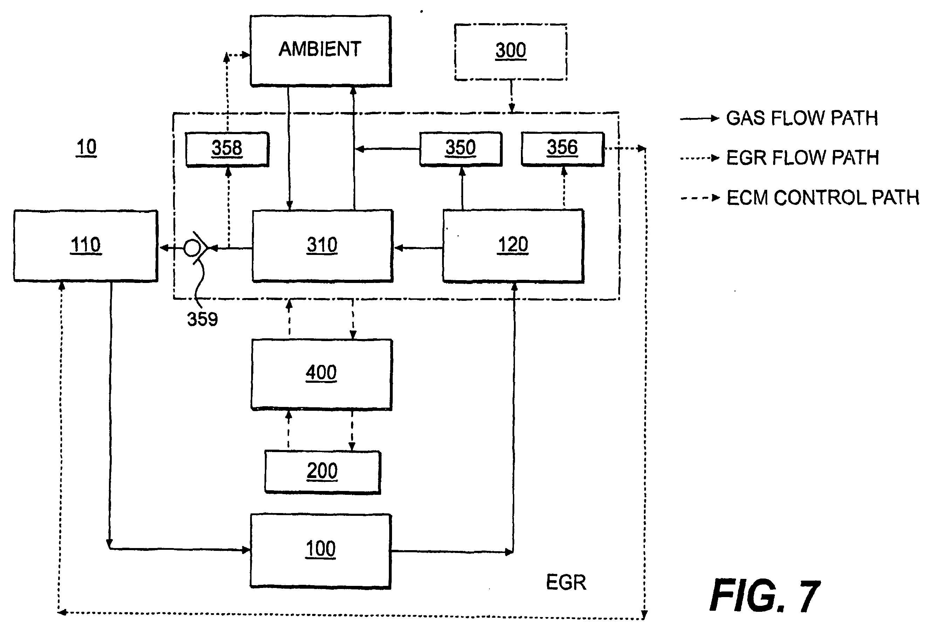

In a similar embodiment, as shown in Fig. 7, a first pressure regulation valve **350** and the EGR valve **356** may be placed upstream from the turbocharger **310.** In this manner, a high-pressure-loop external EGR event is created. The pressure regulation means **300** may further include a second pressure regulation valve **358** downstream of the compressor **312** of the turbocharger **310** and a one-way check valve **359** located between the intake manifold **110** and the compressor **312** to control back flow due to EGR and prevent compressor problems, such as compressor surge.

The pressure in the exhaust manifold **120,** and thus, the pressure gradient across the turbine **311** may be controlled in the same manner as described with reference to the embodiment of the present invention shown in Fig. 3 for better engine braking and/or lower NOₓ emission.

It is contemplated by the present inventors that the turbocharger **310** is not limited to a VGT-type turbocharger. In another embodiment of the present invention, the turbocharger **310** may be a dual entry fixed geometry turbocharger (FGT) and may be combined with a diverter mechanism such that the exhaust flow can be directed to one portion of the turbine **311** of the turbocharger **310** to achieve the same effects as by closing a variable geometry turbocharger.

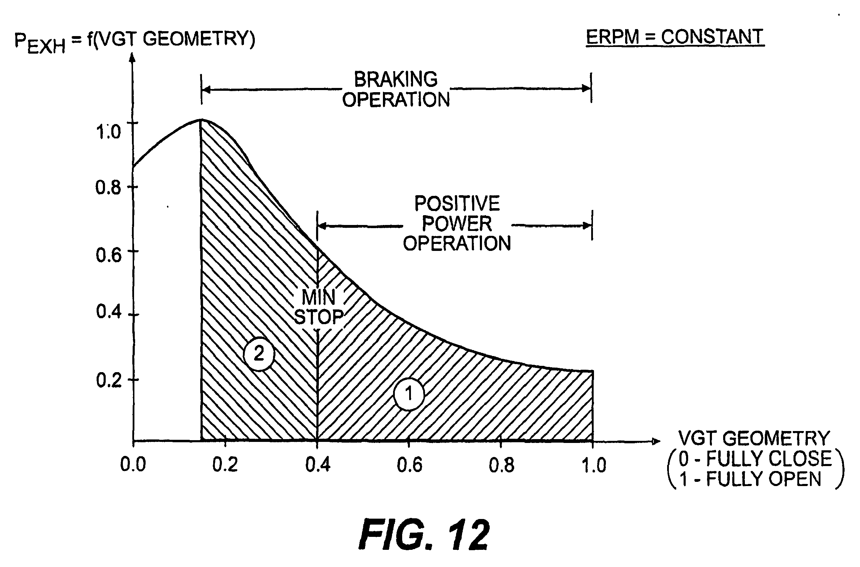

Fig. 12 illustrates exhaust manifold pressure as a function of VGT geometry for a fixed engine speed. For example, prior to the present invention, engine braking systems using VGT could only utilize exhaust manifold pressures represented in the area 1. Conversely, through application of the systems and methods of the present invention, the minimum stop may be eliminated or greatly reduced. As shown in Fig. 12, this increases the available exhaust manifold pressures by an area 2, corresponding to improved engine braking performance. It is to be understood that Fig. 12 is for exemplary purposes only, and, as will be apparent to those of ordinary skill in the art, the actual values represented may vary depending on a variety of factors, such as, for example, the specifications of the engine **100** and the turbocharger **310**.

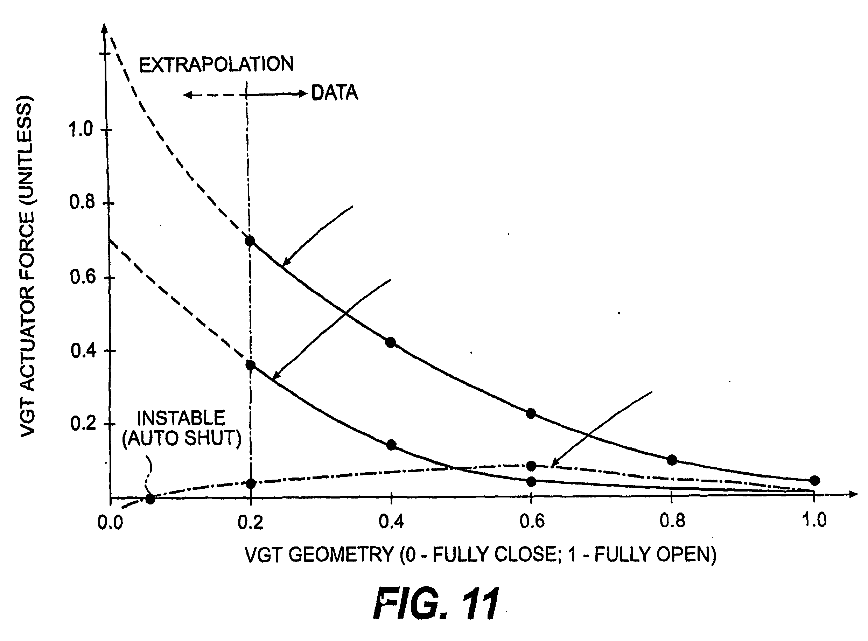

As discussed above, minimizing or reducing the VGT minimum stop position can pose catastrophic turbocharger performance issues. When the VGT vanes close below the minimum stop position, mechanical control instability occurs and the VGT vanes may not be able to be re-opened. Fig. 11 illustrates the forces required to open and close vanes of a variable geometry turbocharger at various engine speeds from various geometry positions prior to the present invention. For example, at an engine speed of 2100 RPM, the turbocharger may become unstable as it approaches a fully closed geometry. Conversely, by controlling the pressure drop across the turbine according to systems and methods of the present invention, the VGT control instability problem may be eliminated.

In one embodiment, the present invention is a method for controlling the engine braking system **10**. The method may include controlling the geometry of the turbocharger **310** for a given engine speed in an open-loop system (i.e. no feedback) for maximum engine braking. The method may further include adjusting, or tuning, the pressure regulation valve(s) **350** in a closed-loop system for different levels of braking, such as, for example, 50% braking or braking for cruise control. In addition, the method may include controlling the pressure gradient across the turbocharger **310** to reduce the vane opening and/or closing forces such that the turbocharger **310** may be re-opened without any mechanical control instability problems.

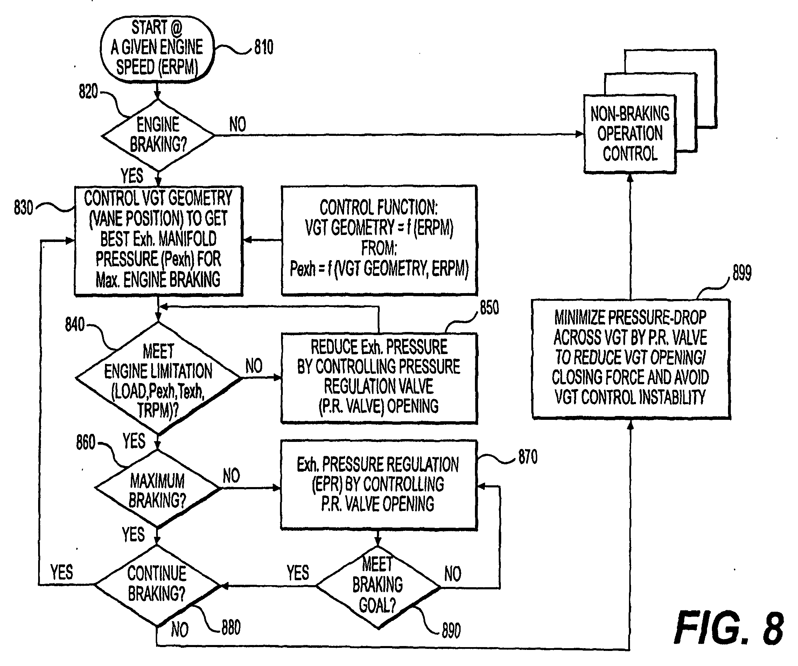

The control of the engine braking system **10** for one embodiment of the present invention will now be described with reference to Fig. 8. It is to be understood that any one or a combination of the above described embodiments of the pressure regulation means **300** may be used to optimize the braking provided by the engine braking system **10** of the present invention.

Fig. 8 illustrates a control diagram for controlling the engine braking system **10** of the present invention. In control block **810**, the ECM **400** receives the current engine speed via its connection to an appropriate engine component, such as a tachometer. Again, as discussed above, the engine speed may be determined by the ECM **400** by any number of known means, as will be apparent to one of ordinary skill in the art.

Next, in control block **820,** the ECM **400** determines whether engine braking is desired. If it is not, the ECM **400** continues with non-braking operation control.

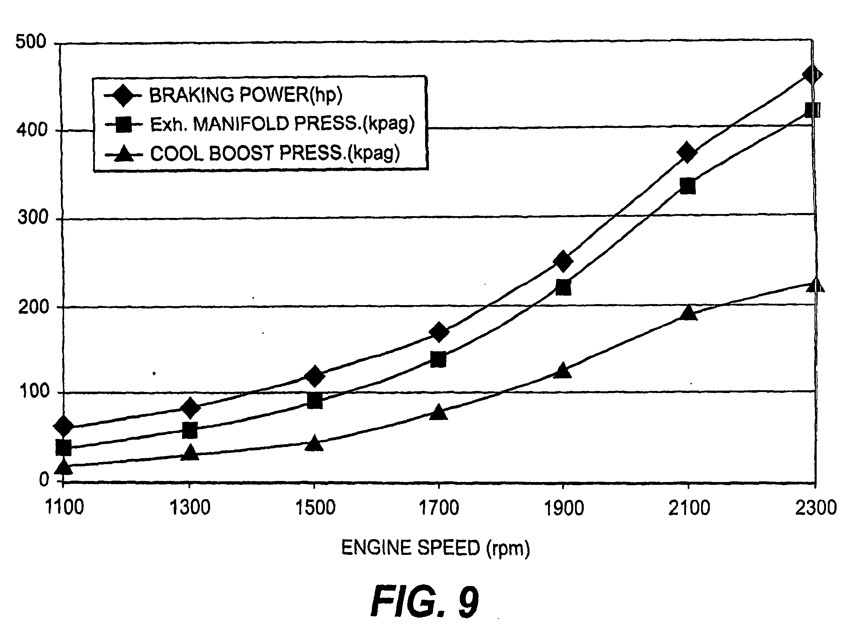

If engine braking is desired, the ECM **400**, in control block **830,** controls the geometry of the turbocharger **310** to provide the best exhaust manifold pressure for maximum engine braking at the given engine speed. As shown in Fig. 9, the variation of braking power with engine speed is more correlated to the exhaust manifold pressure rather than the cool boost pressure for a full-cycle bleeder braking system. It is contemplated, however, that the braking power of the present invention could be controlled by controlling any combination of the exhaust manifold pressure and/or the boost pressure.

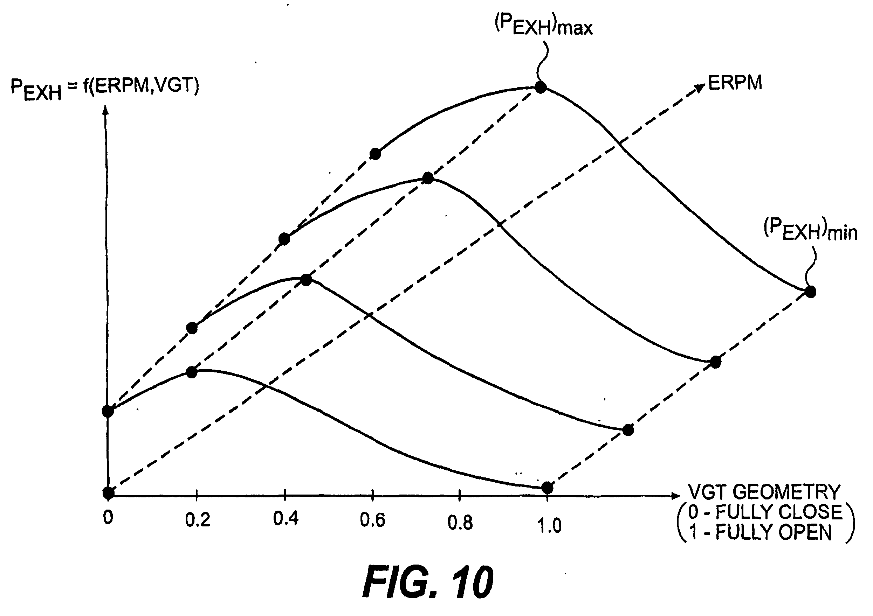

The pressure in the exhaust manifold **110** is a function of the turbocharger **310** geometry and the speed of the engine **100,** for a given engine braking system **10** and a fixed opening of the pressure regulation valve **350.** Fig. 10 illustrates a control map that depicts the exhaust manifold pressure (Pexh) as a function of engine speed (ERPM) and VGT geometry. As illustrated by the map, the maximum exhaust manifold pressure may be achieved at higher engine speeds with less closing of the turbocharger **310**. For example, at lower engine speeds, the turbocharger **310** may need to be closed to 20% open to achieve the maximum exhaust manifold pressure, while at higher engine speeds, the turbocharger **310** may be left 40% open. It is to be understood that Fig. 10 is for exemplary purposes only, and, as will be apparent to those of ordinary skill in the art, the actual values on the control map may vary depending on a variety of factors, such as, for example, the specifications of the engine **100** and the turbocharger **310**.

In control block **840,** the ECM **400** determines whether any limitations for any of the measured engine parameters, have been exceeded. The measured engine parameters may include, but are not limited to, the braking load, the exhaust manifold pressure, the exhaust manifold temperature, and/or the turbine speed. The engine parameters may be measured by any means known to those of ordinary skill in the art, including, but not limited to, sensors connected to the turbocharger **310**, the engine cylinder, the exhaust manifold **120**, or any other part of the engine system.

If any one or more of the engine parameters is exceeded, the ECM **400** reduces the exhaust manifold pressure by controlling the opening of the pressure regulation valve **350**, as shown in control block **850**. This process continues in closed-loop system fashion until the engine parameter is no longer exceeded.

As shown in control block **860**, the ECM **400** determines whether the maximum braking achieved (control block **830**) is needed. If maximum braking is required, the ECM **400** continues to control block **880**. It is possible, however, that the maximum braking level is not required. For example, the engine braking system **10** may be adapted to provide braking levels other than maximum braking, such as, for example, any lower level of braking, and/or braking for cruise control. If the maximum braking level is not required, the ECM **400** adjusts the exhaust manifold pressure by controlling the opening of the pressure regulation valve **350**, as shown in control block **870**. This process continues in closed-loop system fashion until the desired level of engine braking has been met, as shown in control block **890**.

The ECM **400** then determines whether continued braking is required, as shown in control block **880.** If continued braking is required, the control flow of the present invention returns to control block **830** and the geometry of the turbocharger **310** is again controlled to provide the best exhaust manifold pressure for maximum engine braking at a newly updated engine speed. Because braking has occurred at this point, the engine speed may have changed, and correspondingly, the geometry may need to be adjusted from its previous position.

If continued braking is not required, as shown in control block **899,** the ECM **400** minimizes the pressure gradient across the turbocharger 310 by controlling the pressure regulation means **300** according to one or any combination of the methods discussed above. This process reduces the required VGT opening and/or closing force and prevents VGT control instability. Thus, the present invention allows the mechanical stops inherent in conventional VGTs to be eliminated, or at a minimum, moved to a more closed position.

After the pressure gradient across the turbocharger **310** has been controlled, the ECM **400** then proceeds with non-braking operation control. It will be apparent that the method of the present invention allows different levels of engine braking to be achieved at a given engine speed by controlling the pressure regulation means **300** and the geometry of the turbocharger **310.** This control, in turn, leads to improved engine braking performance. It will also be apparent that the method of the present invention may be used to improve positive power operation due to a wider variation range of the VGT after the removal or shift of the mechanical stop.

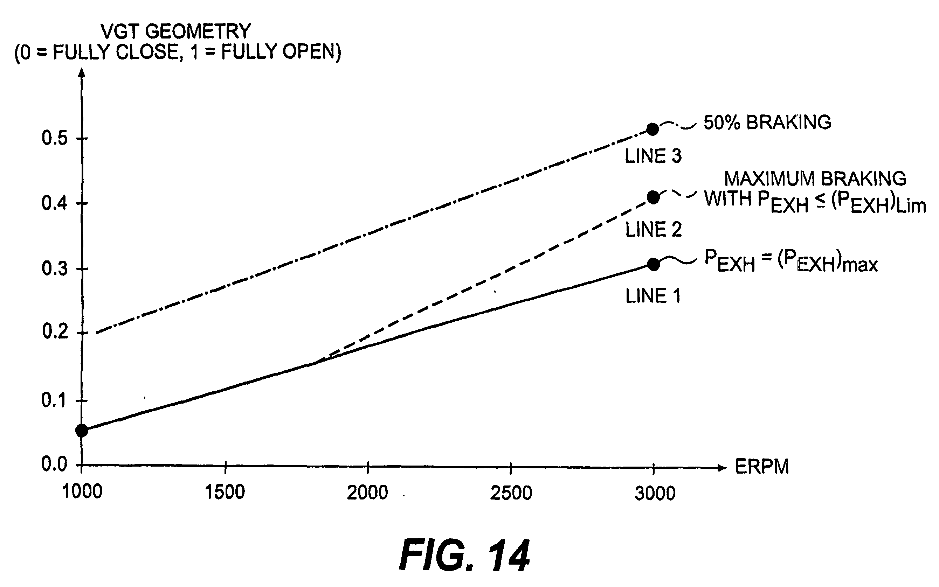

In another embodiment, the present invention is a method for controlling the engine braking system **10**. The method may include controlling the geometry of the turbocharger **310** as a function of engine speed and pressure (exhaust or intake, preferably exhaust). It is contemplated that the maximum braking level may not be required. For example, the engine braking system **10** may be adapted to provide braking levels other than maximum braking, such as, for example, any lower level of braking, and/or braking for cruise control. Fig. 14 is a control diagram illustrating the VGT geometry setting as a function of engine speed. Line 1 in Fig. 14 illustrates the VGT geometry setting for maximum exhaust manifold pressure at different engine speeds. Line 2 in Fig.14 illustrates the VGT geometry setting for maximum braking without excessive exhaust manifold pressures (and exceeded limitations for certain engine parameters) at high engine speeds. Line 3 in Fig. 14 illustrates the VGT geometry setting for lower level braking (for example, 50 % braking) at different engine speeds. Again, it is to be understood that Fig. 14 is for exemplary purposes only, and, as will be apparent to those of ordinary skill in the art, the actual values on the control map may vary depending on a variety of factors, such as, for example, the specifications of the engine **100** and the turbocharger **310.**

The method may further include adjusting, or tuning, the pressure regulation valve **350** at each level of VGT opening. The combination of the position of the pressure regulation valve **350** and the position of the VGT opening provides the different levels of braking. In addition, the method may include minimizing the pressure gradient across the turbocharger **310** to reduce the vane opening and/or closing forces such that the turbocharger **310** may be re-opened without any mechanical control instability problems.

### BLEEDER BRAKING DEVICES

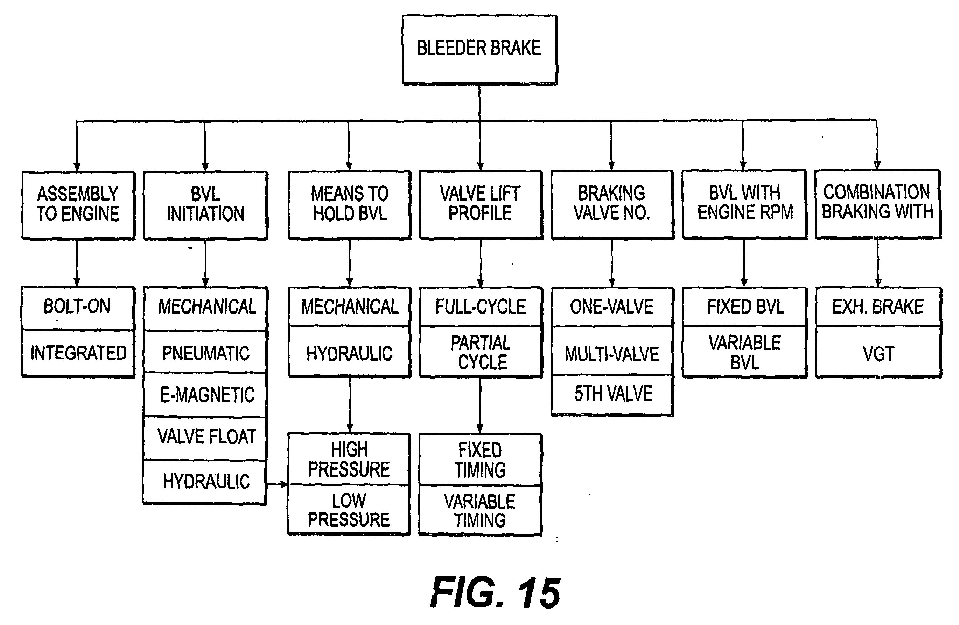

In the preferred embodiment of the present invention, the valve actuation subsystem **200** is a bleeder brake. The valve actuation subsystem **200** may be varied based on at least any of the following attributes: its assembly to the engine **100,** the means used to initiate brake valve lift (BVL), the means used to maintain the BVL, the valve lift profile, the number of braking valves used, the valve lift with respect to the engine speed (fixed or variable), and the pressure regulation means **300** used in combination with the valve actuation subsystem **200.** A chart illustrating the various embodiments of the valve actuation subsystem **200** is shown in Fig. 15.

As shown in Fig. 15, the means of assembling the valve actuation subsystem **200** may include, but is not limited to, bolt-on and integrated assembly means.

The means used to initiate BVL may include, but is not limited to, mechanical means, pneumatic means, electromagnetic means, valve float, high-pressure hydraulic means, low-pressure hydraulic means, and/or any combination of the above.

The means used to hold the BVL may include, but is not limited to, mechanical means, high-pressure hydraulic means, low-pressure hydraulic means, and/or any combination of the above.

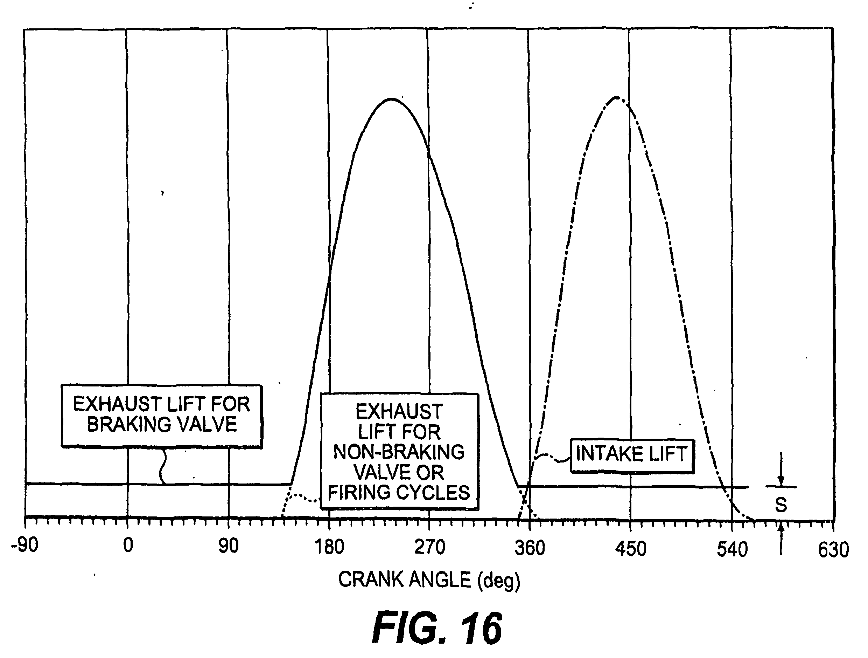

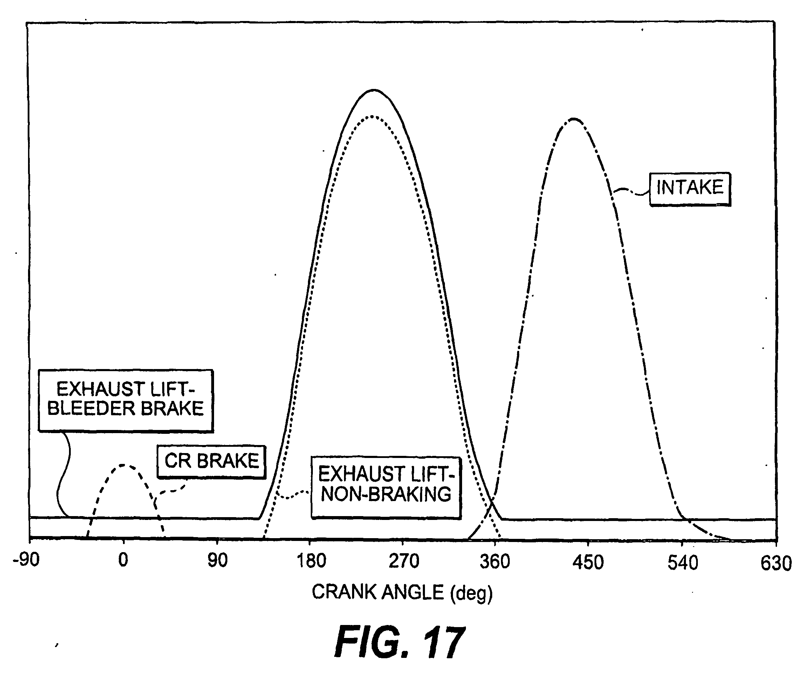

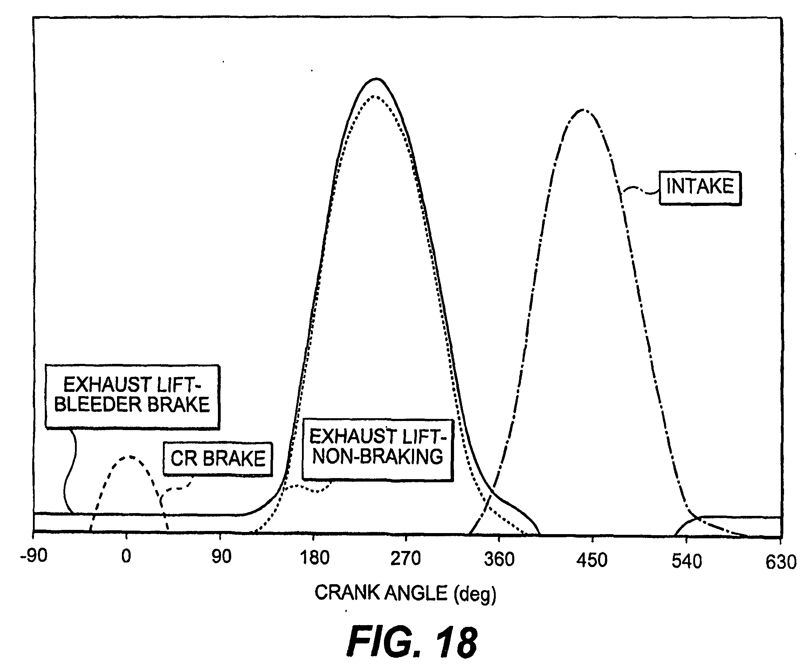

In at least one embodiment of the present invention, the valve lift profile is a full-cycle bleeder brake valve lift profile with no additional braking valve lift, as shown in Fig. 16. In at least one embodiment of the present invention, the valve lift profile is a full-cycle bleeder brake valve lift profile with additional braking valve lift as compared to the non-braking valve lift profile, as shown in Fig. 17. In at least one embodiment of the present invention, the valve lift profile is a partial-cycle bleeder brake valve lift profile, as shown in Fig. 18.

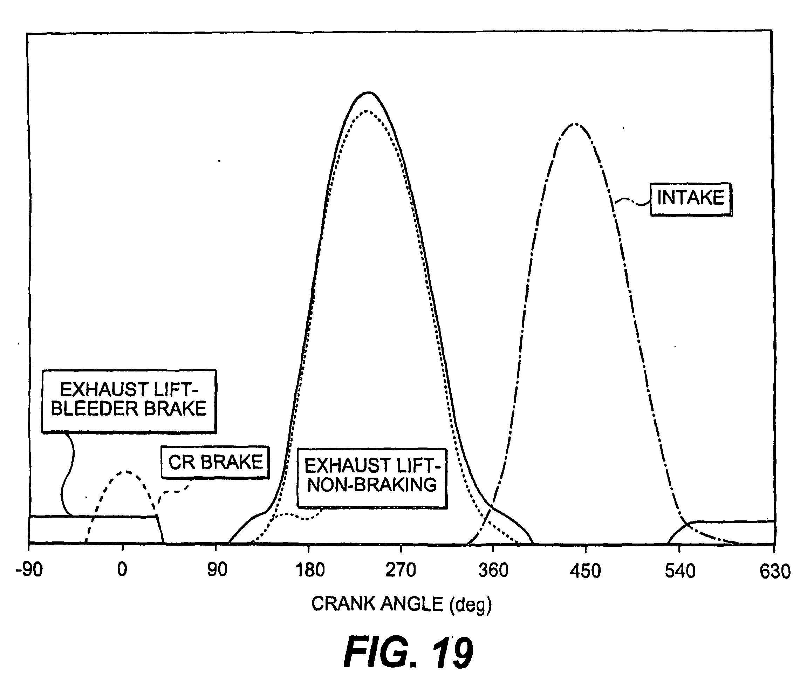

The valve actuation subsystem **200** of the present invention may also be used to achieve an ideal braking valve lift profile, as shown in Fig. 19. The braking valve lift is initiated by valve float, by mechanical means, or by other means near the end of the intake stroke such that braking gas (air) can flow back into the engine cylinder for higher compression release braking power. This event is a first braking gas recirculation (BGR) event. The bleeder braking valve lift is maintained through any of the means discussed above. After a compression release event, the braking valve lift is reset during the expansion stroke. The resetting reduces the cylinder pressure (vacuum effect) and increases pumping work. The braking valve is re-opened before the beginning of the normal exhaust valve lift such that braking gas (air) can flow back into the engine cylinder (a second BGR event) for higher pumping work due to higher pressure in the engine cylinder and exhaust manifold. The valve lift then undergoes the normal exhaust valve lift and is reset at the beginning of the intake stroke. Optimum timing and magnitude of the bleeder valve lift may depend on engine speed, and the position of the turbocharger **310** geometry, as well as other engine parameters.

Other valve lift profiles, such as, but not limited to, a compression-release brake valve lift profile are considered well within the scope of the present invention. Moreover, the valve lift may be either fixed or variable.

As will be apparent to those of ordinary skill in the art, the valve actuation subsystem **200** of the present invention may be adapted to actuate one valve, multiple valves, and/or a dedicated braking valve.

The various embodiments of the valve actuation subsystem **200** of the present invention will now be described in detail.

### STROKE-LIMITED HIGH PRESSURE BLEEDER BRAKE

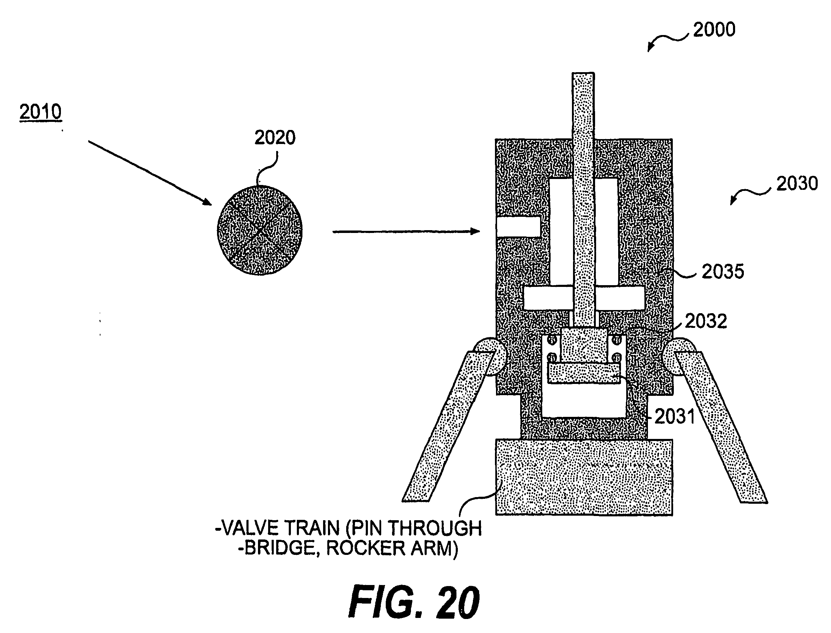

In one embodiment of the present invention, the valve actuation subsystem **200** is a stroke-limited high-pressure bleeder brake assembly **2000**, as shown in Fig. 20. In the preferred embodiment, the bleeder brake assembly **2000** includes a high-pressure fluid source **2010**, a supply valve assembly **2020** for controlling the flow of the high-pressure fluid, and a valve actuation assembly **2030** for actuating and holding open the at least one engine valve during an engine braking event, securably attached to the engine housing (block) **100**.

The engine housing **100** includes a hydraulic passageway(s) (not shown), which forms a hydraulic circuit. The hydraulic circuit enables fluid communication between the fluid source **2010**, the supply valve assembly **2020**, and the valve actuation assembly **2030.**

In the preferred embodiment of the present invention, the high-pressure fluid source **2010** is part of the engine and may comprise a high-pressure plenum (not shown). The high-pressure fluid source **2010** is adapted to store high-pressure fluid, such as, but not limited to, engine fuel. In one embodiment of the present invention, the high-pressure fluid source may comprise a fuel injection system common to the engine. As will be apparent to those of ordinary skill in the art, however, any system capable of supplying high-pressure fluid during an engine braking cycle are considered well within the scope of the present invention.

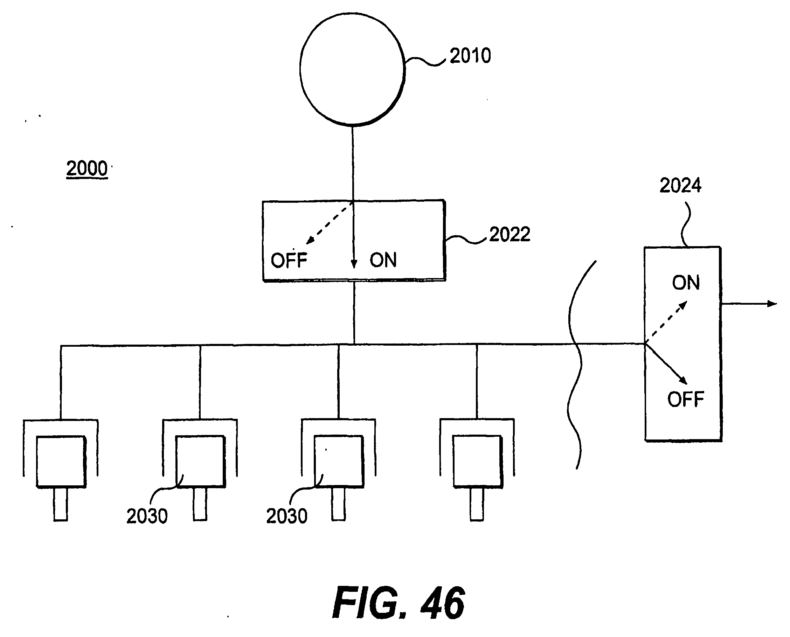

In the preferred embodiment of the present invention, the supply valve assembly **2020** comprises a first high-pressure solenoid valve **2022** capable of receiving high-pressure fluid from the high pressure fluid source **2010** and controlling the flow of high-pressure fluid to the valve actuation assembly **2030** to actuate the at least one engine valve. The first solenoid valve **2022** is in fluid communication with the fluid source **2010** through the hydraulic circuit. In one embodiment of the present invention, the supply valve assembly **2020** further comprises a second high-pressure solenoid valve **2024** in fluid communication with the hydraulic circuit. The second solenoid valve **2024** is adapted to release the high-pressure fluid from the valve actuation assembly **2030** when the braking event is disabled. The fluid may be released, for example, back to the fluid source **2010,** or to ambient. The supply valve assembly **2020**, including the first solenoid valve **2022** and the second solenoid valve **2024**, is illustrated in Fig. 46- As shown in Fig. 46, the present invention may operate in a multiple cylinder engine, wherein each cylinder includes a valve actuation assembly **2030**.

As shown in Fig. 46, the first solenoid valve **2022** and the second solenoid valve **2024** are preferably high-pressure, two-way solenoid valves. However, it is contemplated that the supply valve assembly **2020** may include a single three-way solenoid valve rather than two two-way solenoid valves. As will be apparent to those of ordinary skill in the art, the single three-way solenoid valve may be adapted to supply high-pressure fluid to the valve actuation assembly **2030** during braking and release the fluid from the valve actuation assembly to disable the braking event.

In the preferred embodiment of the present invention, the valve actuation assembly **2030** comprises a stroke-limited, hydraulic piston portion **2031** capable of receiving high-pressure fluid from the supply valve assembly **2020**, and a return spring **2032**. The return spring **2032** is biased to push the hydraulic piston **2031** away from the at least one engine valve (braking valve) when braking is disabled. As will be apparent to those of ordinary skill in the art, the valve actuation assembly **2030** may be connected to the supply valve assembly **2020** through the hydraulic circuit.

The valve actuation assembly **2030** further includes a stopper **2035** for limiting the stroke of the hydraulic piston portion **2031** to a predetermined distance. The stopper **2035** may be adapted such that the predetermined distance is equivalent to a bleeder braking valve lift.

In addition, the hydraulic piston **2031** is sized such that the hydraulic force provided by the high-pressure fluid during engine braking is sufficient to overcome the force of the return spring **2032**, the force of the engine valve spring(s), and the force of gas pressure on the at least one engine valve to initiate and maintain the braking valve lift.

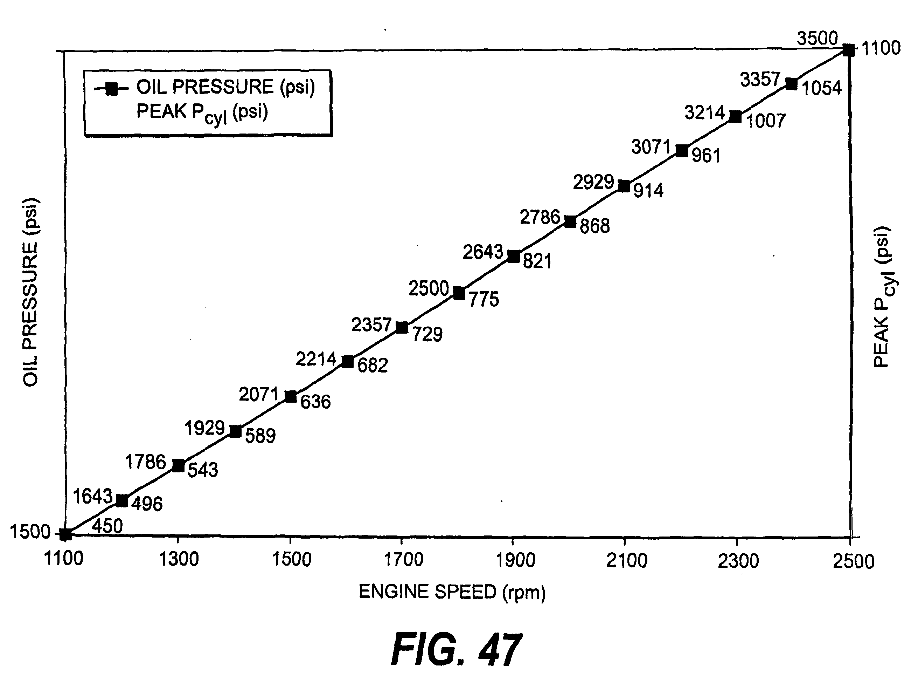

The hydraulic force provided by the high-pressure fluid preferably varies with engine speed. Fig. 47 illustrates the fluid pressure required for actuating the valve actuation assembly **2030** at various engine speeds. For example, at an engine speed of approximately 2300 rpm, when the peak cylinder pressure is approximately 1007 psi, a braking fluid pressure of approximately 3214 psi is required to actuate the at least one engine valve. The variance in the hydraulic force provided by the high-pressure fluid helps reduce leakage and demand on the fluid source **2010.** It is to be understood that Fig. 47 is for exemplary purposes only, and, as will be apparent to those of ordinary skill in the art, the actual values of braking fluid pressure versus engine speed may vary depending on a variety of factors, such as, for example, the specifications of the engine **100**.

In one embodiment of the present invention, the hydraulic piston **2031** is sized such that the hydraulic force provided by the high-pressure fluid and the force differential created by the pressure regulation means **300** during the braking event are sufficient to overcome the force of the return spring **2032**, the force of the engine valve spring(s), and the force of gas pressure on the at least one engine valve to initiate and maintain the braking valve lift and effectuate the braking event.

Operation of the stroke-limited high-pressure bleeder brake assembly **2000** will now be described. During positive power, the supply valve assembly **2020** is turned off such that high-pressure fluid is not supplied to the valve actuation assembly **2030.** In one embodiment of the present invention, the first solenoid valve **2022** is in the "off" position and the second solenoid valve **2024** is in the "on" position. Because of the bias in the return spring **2032** and the lack of fluid pressure, the hydraulic piston **2031** does not contact the at least one engine valve. As such, positive power operation is unaffected and follows a normal valve lift profile.

During engine braking, the ECM **400** controls the high-pressure fluid source **2010** to supply the high-pressure fluid to the supply valve assembly **2020.** Under control of the ECM **400**, the supply valve assembly **2020** supplies the high-pressure fluid through the hydraulic passageway, to the valve actuation assembly **2030.** The hydraulic force created by the high-pressure fluid displaces the piston 2031 a set distance, causing the piston **2031** to contact and actuate the at least one engine valve. The at least one engine valve is held open by the hydraulic force of the fluid for the duration of the braking cycle. In the preferred embodiment of the present invention, the braking cycle is a full-cycle bleeder braking cycle.

In one embodiment of the present invention, as shown in Fig. 46, the first solenoid valve **2022** is in the "on" position, and the second solenoid valve **2024** is in the "off" position during the braking event. When engine braking is disabled, the first solenoid valve **2022** is switched to the "off" position to prevent additional high-pressure fluid from reaching the valve actuation assembly **2030**, and the second solenoid valve **2024** is switched to the "on" position and is adapted to release the high-pressure fluid from the valve actuation assembly **2030**.

Because of its simple design, the stroke-limited high-pressure bleeder brake assembly of the present invention does not require control valves, master pistons, reset screws, and any additional hardware associated with these components. As such, it is cheaper, simpler, better packaged, and more reliable than known, bolt-on brakes. Additionally, there is no hydraulic compliance in the braking system because the high pressure fluid holds the piston **2031**, and thus, the at least one engine valve, open against a hard stop. Therefore, the stroke-limited high-pressure bleeder brake assembly of the present invention provides better braking performance than known bleeder braking systems.

### INTEGRATED ROCKER BLEEDER FOR FULL-CYCLE BLEEDER

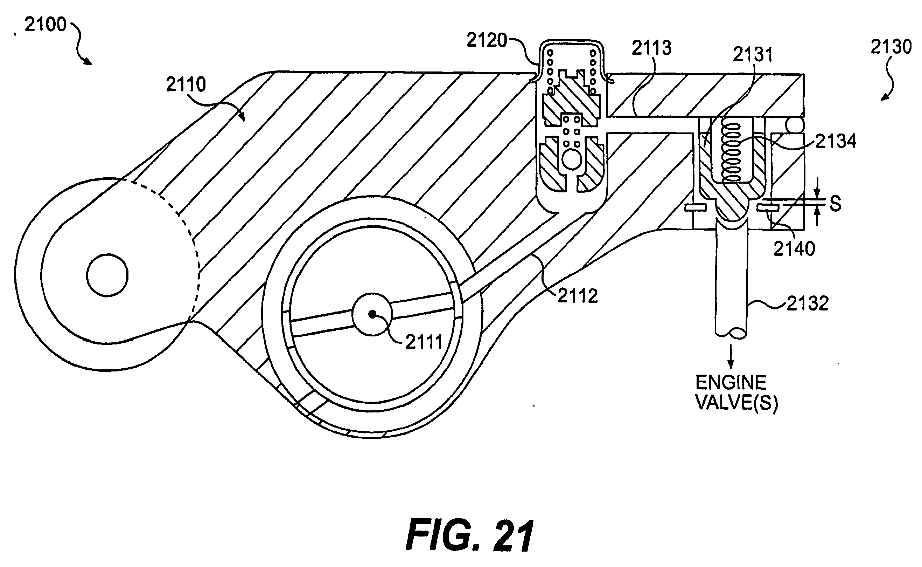

In another embodiment of the present invention, the valve actuation subsystem **200** is an integrated rocker bleeder (IRB) assembly **2100,** as shown in Fig. 21. In the preferred embodiment, the IRB assembly includes a rocker arm **2110,** a valve assembly **2120,** and a piston assembly **2130** for actuating at least one engine valve.

The rocker arm **2110** may include a plurality of passageways, forming a control circuit therein. The passageways are capable of receiving hydraulic fluid therein, such as, for example, engine oil. The rocker arm **2110** includes a first passageway **2111** that extends therethrough, as shown in Fig. 21. Hydraulic fluid is supplied to the IRB assembly **2100** through the first passageway **2111** from a supply valve assembly (preferably solenoid), not shown. The rocker arm **2110** also includes a second passageway **2112** that extends substantially orthogonal to the first passageway **2111**. The second passageway **2112** is fluidically connected to the first passageway **2111**. The rocker arm **2110** also includes a third passageway **2113**. The third passageway **2113** is fluidically connected to the second passageway **2112**.

The orientation of the first passageway **2111**, the second passageway **2112**, and the third passageway **2113**, within the rocker arm **2110**, may be modified based upon such factors as engine configuration and size.

The valve assembly **2120** is located within the rocker arm **2110** to control the flow of hydraulic fluid from the second passageway **2112** to the third passageway **2113.** The valve assembly **2120** is preferably a control valve to prevent the backflow of hydraulic fluid from the third passageway **2113** to the second passageway **2112**. As will be apparent to those of ordinary skill in the art, other suitable means may be employed to prevent the backflow of hydraulic fluid from the third passageway **2113** to the second passageway **2112**.

The piston assembly **2130** is located within the rocker arm **2110**. The piston assembly **2130** includes a first portion **2131** located within the third passageway **2113** and a second portion **2132** that is adapted to engage the at least one engine valve and facilitate the opening and closing of the at least one engine valve to effectuate a bleeder braking event. The first portion **2131** of the piston assembly **2130** is secured to the rocker **2110** by a spring **2134**. The spring **2134** biases the piston assembly **2130** in the downward direction, which slightly separates the piston assembly **2130** from the rocker arm **2110** and facilitates the application of oil pressure on the piston assembly **2130**. In addition, the spring **2134** provides an additional force on the at least one engine valve during braking to facilitate valve lift. In addition, a stopper assembly **2140** is located within the third passageway **2113** to control the travel of the first portion **2131** of the piston assembly **2130**, and thus, the bleeder braking valve lift.

Operation of the IRB assembly **2100** of the present invention during a bleeder braking cycle will now be described.

In the preferred embodiment, the engine control means (ECM) **400** controls the supply valve assembly to supply engine oil to the rocker arm **2110**. The engine oil flows through the first passageway **2111**, through the second passageway **2112,** through the control valve assembly **2120** to the piston assembly **2130.** The presence of the engine oil creates a force differential across the piston assembly **2130**.

Simultaneously, the ECM **400** controls the pressure regulation means **300** such that the level of pressure in the exhaust manifold **120** creates a force differential across the at least one engine valve that alone, or coupled with the pressure supplied by the engine oil and/or the force of the spring **2134** of the piston assembly **2130**, is sufficient to overcome the engine valve closing force and cause the piston assembly **2130** to pop out and travel in a downward motion.

The stopper assembly **2140** limits the downward motion of the piston assembly **2130** to a pre-determined distance, s. This causes the second portion **2132** to engage the at least one engine valve and open the at least one engine valve to a pre-determined distance, s, as shown in Fig. 21. This distance is much less than the valve lift for a conventional compression release brake. A comparison between the exhaust valve lift for the IRB assembly **2100** of the present invention and the exhaust valve lift for a conventional engine compression release brake is illustrated in Fig. 17.

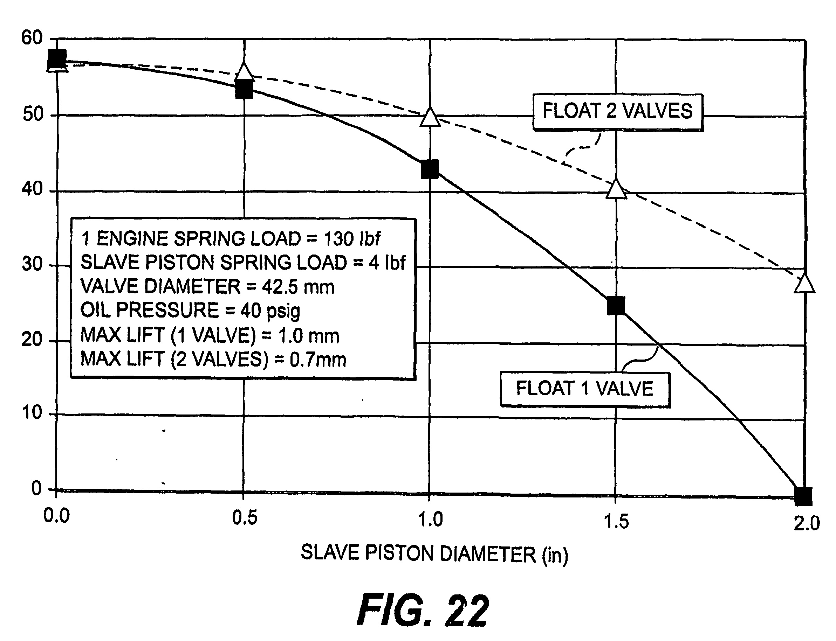

An example of the pressure differential across the engine valve(s) required to float one and two exhaust valves of different diameters for the piston assembly **2130** and fixed values for the oil pressure, the engine valve spring load, and the load of the spring **2134** is illustrated in Fig. 22. For example, where the piston assembly has a diameter of 1.5 inches, a pressure differential of 25 psi across the piston assembly **2130** is required to float one exhaust valve. For a diameter of 1.0 inch, less than 45 psi pressure drop (maximum) across the valve(s) is needed to open one valve with oil pressure of 40 psi gage.

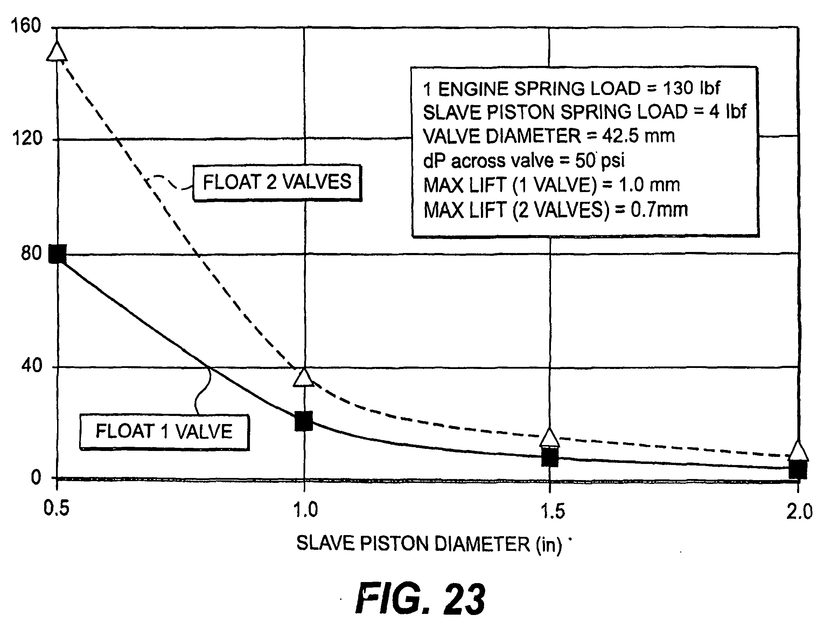

Similarly, an example of the oil pressure required to float one and two exhaust valves of different diameters for the piston assembly **2130** and fixed values for the pressure differential across the valve(s), the engine valve spring load, and the load of the spring **2134** is illustrated in Fig. 23. For example, for a piston assembly **2130** diameter of 1.0 inch, an oil pressure of approximately 20 psi gage is needed to open one valve with a pressure differential across the valve(s) of 50 psi.

Other means for providing the required force differential to create the exhaust valve float are considered within the scope of the present invention. For example, hydraulic fluid pressure alone may be used to create a force differential across the piston assembly **2130** sufficient to cause the second portion **2132** to pop out, overcome the exhaust valve closing force and the load of the spring **2134**, and open the exhaust valve(s).

After the engine valve float has occurred, the engine oil is trapped between the control valve assembly **2120** and the piston assembly **2130** in the third passageway **2113**. This hydraulic lock holds the at least one engine valve open for a full-cycle bleeder braking cycle. As discussed below, it is contemplated that embodiments of the IRB assembly **2100** may also be used for partial-cycle bleeder braking valve lift profile.

The potential benefits of a bleeder brake are low initial braking load, low cost, and low noise. In addition, due to the introduction of methods and systems of the present invention, both the exhaust and intake manifold pressures are much higher than conventional FGT, which increases the bleeder brake performance.

With reference to Fig. 21, operation of the IRB assembly **2100** of the present invention during positive power cycles will now be described.

During positive power cycles, the supply valve assembly, not shown, shuts and cuts off the supply of engine oil to first passageway **2111**. Oil trapped in the circuit is dumped out through the control valve assembly **2120** and the piston assembly **2130** re-seats. The at least one engine valve opens and closes normally. Without oil pressure to push down the piston assembly **2130** and, subsequently, the exhaust valve(s), a much higher pressure drop across the valve(s) is needed to float the valve(s). Furthermore, the exhaust pressure should be lower during positive power cycles, because higher exhaust pressure means more pumping loss which hurts fuel efficiency. Therefore, there will be no valve floating, no separation of the exhaust drive train, and no noise during positive power cycles.

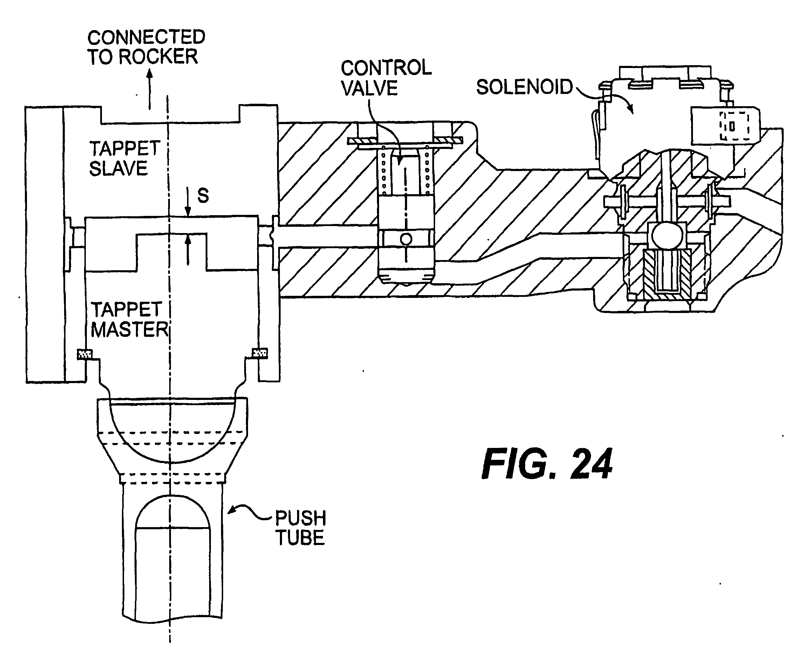

With reference to Fig. 24, in another embodiment of the present invention, for engines with push tubes, the hydraulic actuation could be moved from the IRB assembly to the push tube side of the engine system. The actual braking process is essentially the same as with the IRB assembly. The difference is that engine oil will be supplied to the gap **2150** between a first tappet **2160** and a second tappet **2170** which separate the drive train. The trapped oil in the gap **2150** causes the at least one engine valve to open.

Compared with known integrated engine rocker brakes, the IRB assembly **2100** of the present invention has a much lower initial braking load, less weight and inertia, and does not need a reset. As such, the present invention has much better reliability and durability than prior known valve actuation subsystems. In addition, because it incorporates the methods to increase bleeder brake performance discussed above, the IRB assembly **2100** of the present invention provides better braking performance than known bleeder braking systems.

### RESETTABLE INTEGRATED ROCKER BLEEDER FOR PARTIAL-CYCLE BLEEDER

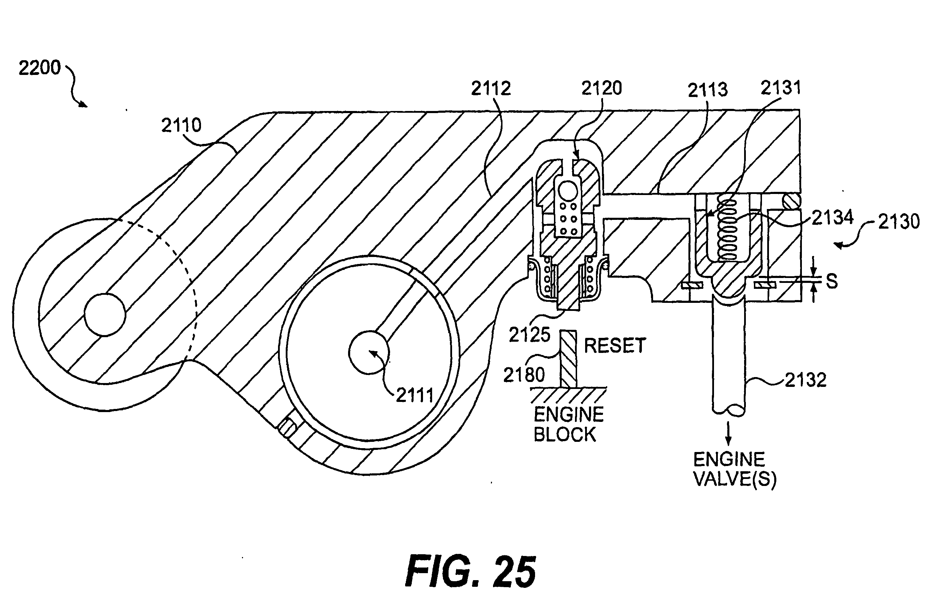

In an alternative embodiment of the IRB assembly **2100** discussed above, partial-cycle bleeder brake operation is achieved with the resettable IRB assembly **2200**, as shown in Fig. 25.

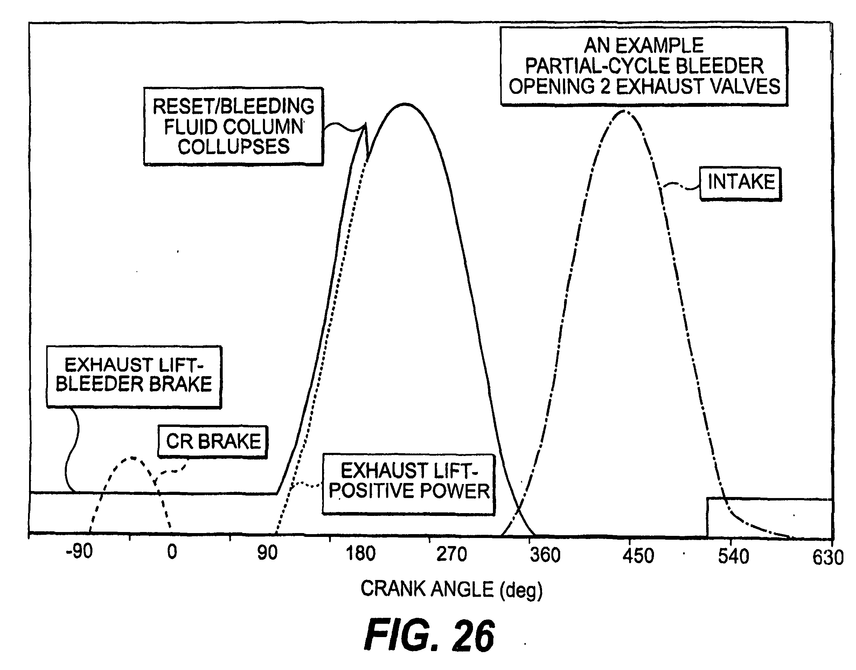

In this embodiment, the control valve assembly **2120** further includes a valve stem **2125** extending from the rocker arm **2110**. In addition, the IRB assembly **2200** includes a reset pin **2180** mounted on the engine block below the valve assembly **2120**. Operation of the IRB assembly **2200** will now be described, with reference to Fig. 25 and Fig. 26, which illustrates the valve lift profile for the present embodiment. The operation of the IRB assembly **2200** is similar to the operation of the IRB assembly **2100** discussed above, however, as the at least one engine valve moves toward peak lift, the valve stem **2125** contacts the reset pin **2180.** This causes the control valve assembly **2120** to be pushed upwards into its non-braking position, where any trapped oil can be released to ambient Once the oil column collapses, the piston assembly **2130** is re-seated and the at least one engine valve follows the valve motion for positive power cycles. This episode is represented by the spike in the valve profile shown in Fig. 26.

As the cam retreats from its peak lift, the valve stem **2125** separates from the reset pin **2180** and the control valve assembly **2120** is pushed back into its braking position by the refilling of supply oil pressure. However, the piston assembly **2130** does not actuate the at least one engine valve during most of the intake stroke due to a low pressure gradient across the braking valve(s) and the slow build-up of oil pressure in the third passageway **2113** by a controlled refill process. Near the end of the intake stroke, the pressure differential across the braking valve(s), or the valve float force, reaches a local maximum which can be controlled by the pressure regulation means **300.** The increased valve float force combined with the established oil pressure in the passageway **2113** is sufficient to overcome the braking valve spring load and open the at least one engine valve near the end of the intake stroke to form a partial-cycle bleeder brake valve lift. This process is illustrated in Fig. 26 by the lack of valve lift during the approximate duration of the intake stroke.

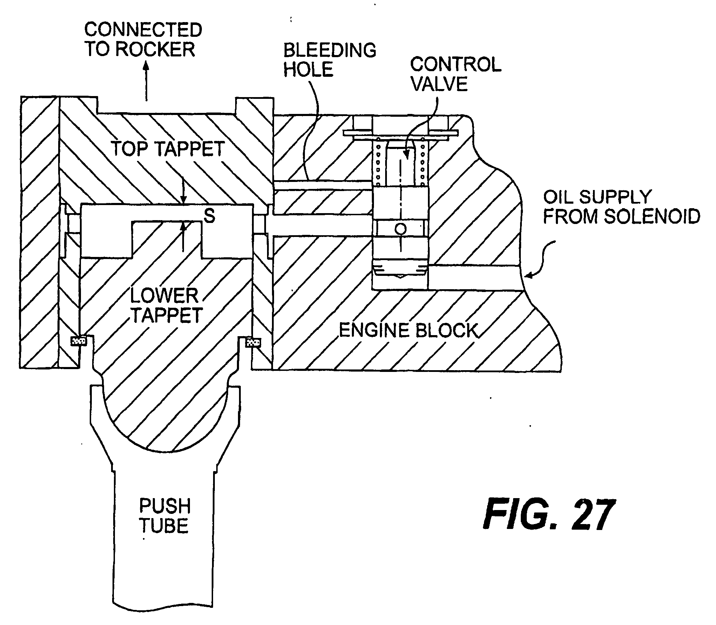

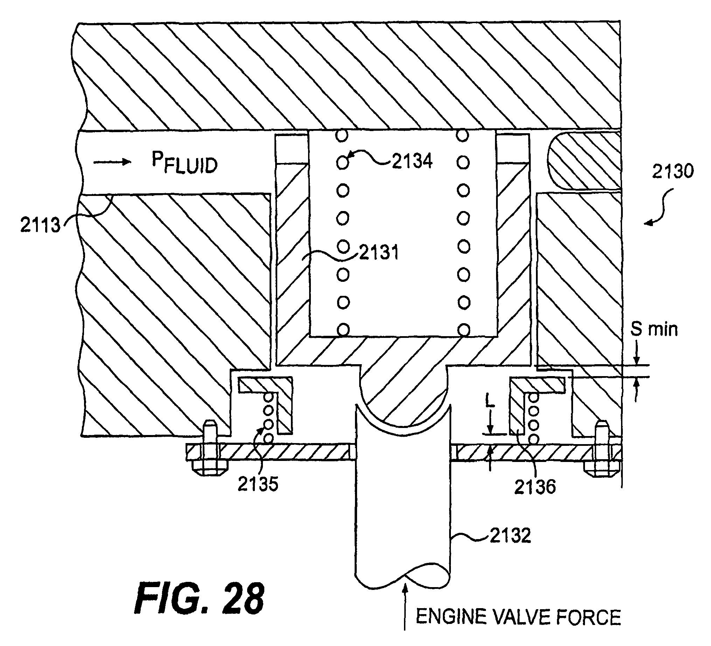

It is contemplated that the same principle could be used with the push tube assembly described above through the use of a bleeding hole, as shown in Fig. 27. Furthermore, the piston assembly **2130** may include a spring **2135** and a spring guide **2136** to provide for variable bleeder lift, as shown in Fig. 28. Variable bleeder lift is desirable for braking optimization with engine speed. For example, as engine speed increases, the bleeder lift should increase to provide maximum engine braking. When engine speed is low, however, less braking, and, accordingly, less bleeder lift is required.

With reference to Fig. 28, when the engine speed is low, the pressure differential across the at least one exhaust valve (Pexh - Pcyl) is also low, and there is less tendency of valve floating. Accordingly, the piston assembly **2130** and the engine valve will travel only a small distance, S_min, as shown in Fig. 28. As the engine speed increases, the pressure differential also increases and the piston assembly **2130** is pushed against the spring **2135** and forces the spring guide **2136** into contact with the bottom surface of the rocker **2110**. In this manner, the maximum travel of the piston assembly **2130**, and correspondingly, the at least one engine valve, is then S_min + L, as shown in Fig. 28.

It is contemplated that the embodiment of the resettable IRB assembly 2100 may also be used for partial-cycle bleeder braking and/or compression release-type braking, as shown in Fig. 18.

Compared with known integrated engine rocker brakes, the IRB assembly **2200** of the present invention has a much lower initial braking load, less weight and inertia, and does not need a reset As such, the present invention has much better reliability and durability than prior known valve actuation subsystems. In addition, because it incorporates the methods to control and increase bleeder brake performance discussed above, the IRB assembly **2200** of the present invention provides better braking performance than known bleeder braking systems. Furthermore, because the partial-cycle bleeder valve lift is minimal (approximately 1 mm) and does not occur during the majority of the intake stroke, the IRB assembly 2200 reduces the tendency of valve to piston contact in the engine cylinder.

### INTEGRATED ROCKER BLEEDER WITH EXTERNAL ACTUATION

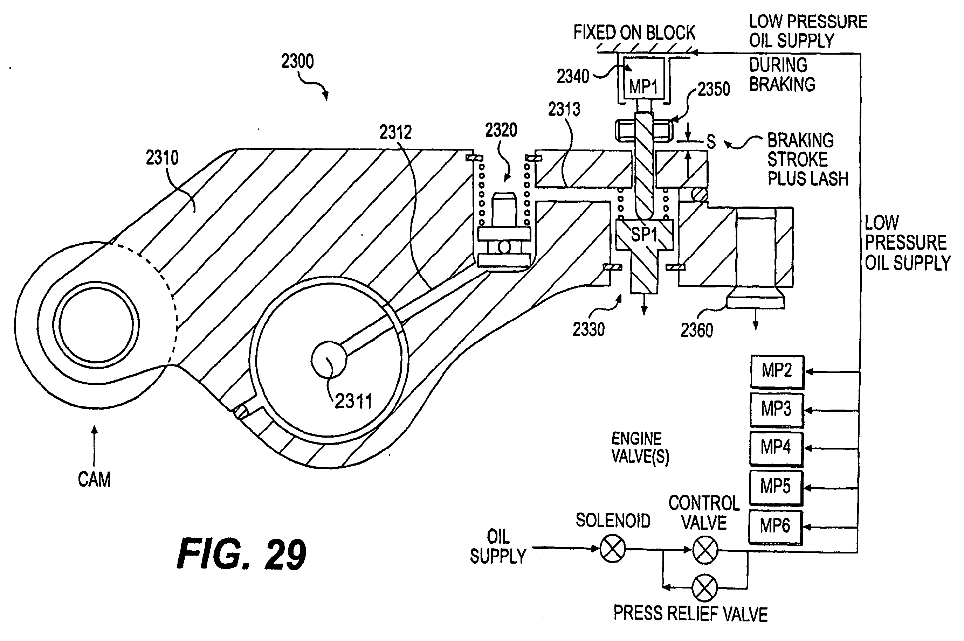

In still another embodiment of the valve actuation subsystem **200** of the present invention, full-cycle bleeder brake operation is achieved with an IRB assembly **2300** that uses external actuation means instead of valve float. In the preferred embodiment, as shown in Fig. 29, the IRB assembly **2300** includes a rocker arm **2310**, a supply valve assembly (not shown), a control valve assembly **2320**, a slave piston assembly **2330**, a master piston assembly **2340**, an actuation pin **2350,** and an valve actuation assembly **2360,** which is connected to a valve bridge.

The rocker arm **2310** may include a plurality of passageways, forming a control circuit therein. The passageways are capable of receiving hydraulic fluid therein, such as, for example, engine oil. The rocker arm **2310** includes a first passageway **2311** that extends therethrough, as shown in Fig. 29. Hydraulic fluid is supplied to the IRB assembly **2300** through the first passageway **2311** from the supply valve assembly (preferably solenoid). The rocker arm **2310** also includes a second passageway **2312** that extends substantially orthogonal to the first passageway **2311**. The second passageway **2312** is fluidically connected to the first passageway **2311**. The rocker arm **2310** also includes a third passageway **2313**. The third passageway **2313** is fluidically connected to the second passageway **2312.**

The orientation of the first passageway **2311,** the second passageway **2312,** and the third passageway **2313,** within the rocker arm **2310,** may be modified based upon such factors as engine configuration and size.

The valve assembly **2320** is located within the rocker arm **2310** to control the flow of hydraulic fluid from the second passageway **2312** to the third passageway **2313**. The valve assembly **2320** is preferably a control valve to prevent the backflow of hydraulic fluid from the third passageway **2313** to the second passageway **2312**. As will be apparent to those of ordinary skill in the art, other suitable valve means may be employed to prevent the backflow of hydraulic fluid from the third passageway **2313** to the second passageway **2312**.

In the preferred embodiment, the master piston assembly **2340** is fixed on the engine block **100**. During braking, the master piston assembly **2340** is fluidically connected to a low-pressure oil supply, as shown in Fig. 29. As will be apparent to those of ordinary skill in the art, the low-pressure oil supply includes a solenoid valve, a control valve, and a pressure relief valve, and may feed master piston assemblies for each of the engine cylinders.

The slave piston assembly **2330** is located within the rocker arm **2310** below the master piston assembly **2340**. The actuation pin **2350** is located between the slave piston assembly **2330** and the master pin assembly **2340,** having a first portion extending within the rocker arm **2310** and a second portion extending outside the rocker arm **2310**.

Operation of the IRB assembly **2300** that uses external actuation means instead of valve float will now be described. The IRB assembly is illustrated in positive power position in Fig. 29.

During engine bleeder braking cycles, engine oil is supplied to the rocker arm **2310**. The engine oil flows through the first passageway **2311**, through the second passageway **2312**, through the valve assembly **2320** to the slave piston assembly **2330**. Simultaneously, oil is also supplied to the external master piston assembly **2340** from the external oil supply. As the cam rotates and pushes the rocker arm 23**10** and the valve actuation assembly **2360** to open the exhaust valves of the engine, the slave piston assembly **2330** and the actuation pin **2350** follow. The slave piston assembly **2330** contacts and actuates one braking valve.

As this occurs, the master piston assembly **2340** follows the actuation pin **2350** until the master piston assembly **2340** hits its bottom stop after a travel distance slightly larger than S, which is equivalent to the bleeder lift plus valve lash. As the exhaust valves return, the actuation pin **2350** contacts the master piston assembly **2340** and stops the slave piston assembly **2330** from returning. This keeps the one braking valve open while the rocker arm **2310** continues to move up until the non-braking valve actuated by the valve actuation assembly **2360** returns to its seat This generates a relative motion, or gap, of S distance between the slave piston assembly **2330** and the rocker **2310**. The gap S is filled with oil, which is trapped between the slave piston assembly **2330** and the control valve assembly **2320**. The trapped oil holds the braking valve open during the entire full-cycle bleeder braking cycle. The resulting valve lift is illustrated in Fig. 17.

The oil pressure on the master piston assembly **2340** is regulated by the external pressure relief valve such that the level of force on the actuation pin **2350** is larger than the spring load of one valve (to hold the braking valve open), but smaller than the spring load of two valves (to allow the non-braking valve to return to its seat).

During positive power cycles, all supply valves shut and oil supply to the slave piston assembly **2330** and the master piston assembly **2340** is cut off. Oil trapped in the circuit is dumped out through the control valve assembly **2320**. Both the braking and non-braking valves are driven by the rocker arm **2310** through the valve bridge and there is no load on the slave piston assembly **2330** and the master piston assembly **2340**. As such, the normal exhaust valve lift profile for engine power operation is achieved.

Compared with known integrated engine rocker brakes, the IRB assembly 2300 of the present invention has a much lower braking load, less weight and inertia, and does not need a reset. As such, the present invention has much better reliability and durability than prior known valve actuation subsystems. In addition, because it incorporates the methods to increase bleeder brake performance discussed above, the IRB assembly **2300** provides better braking performance than known bleeder braking systems.

### INTEGRATED ROCKER BLEEDER WITH MECHANICAL LOCK

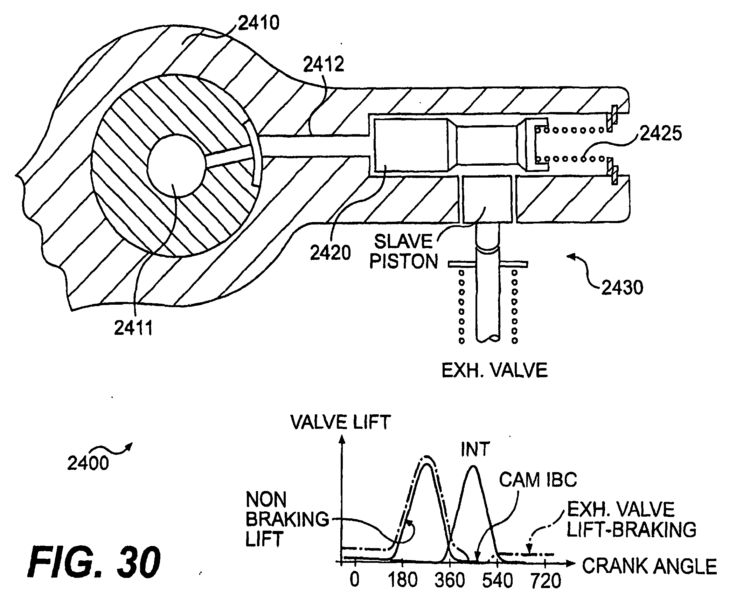

In another embodiment of the present invention, partial-cycle bleeder brake operation is achieved with an IRB assembly **2400** that hydraulically initiates valve lift, but maintains valve lift with a mechanical lock. In this embodiment, as shown in Fig. 30, the IRB assembly includes a rocker arm **2410** having a first fluid passageway **2411** and a second fluid passageway **2412** formed therein, a supply valve assembly (not shown), an actuation pin **2420** housed in a first bore formed in the rocker arm **2410** for controlling the bleeder braking function, and a braking actuation piston assembly **2430** housed in a second bore formed in the rocker arm 2410 for actuating the at least one engine valve.

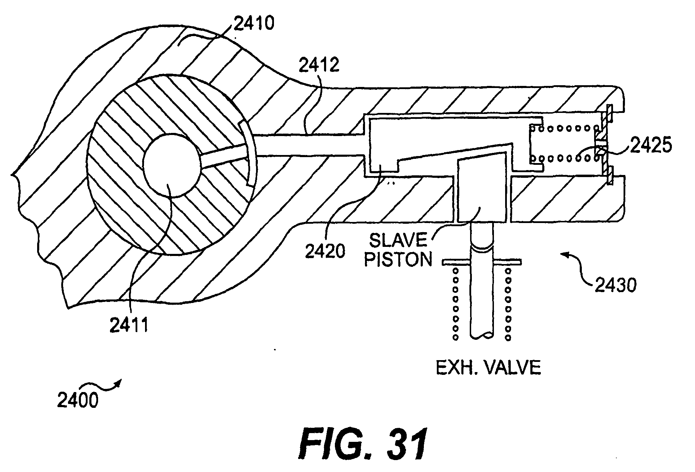

In the preferred embodiment, the actuation pin **2420** includes a larger portion which is used during braking operation, and a smaller portion used during non-braking operation. Other embodiments of the actuation pin, including, but not limited to, a wedged-shaped pin, as shown in Fig. 31, could be used to accomplish the functions of the present embodiment.

During non-braking operation, the actuation pin **2420** is biased to the left, as shown in Fig. 30, by a spring **2425** secured to the rocker arm **2410**. The braking actuation piston assembly **2430** is adapted such that there is a lash in the valve train which is equivalent to the bleeder brake valve lift plus the normal engine valve lash (i.e., when the engine is cold) when the cam is at the inner base circle (IBC) portion. As the cam continues to push the rocker **2410**, the lash is taken up and the normal exhaust valve lift profile for engine power operation is achieved. The non-braking valve lift is represented by the thin line shown in Fig. 18.

During engine braking cycles, hydraulic fluid, such as, but not limited to, engine oil, is supplied through the supply valve means (preferably solenoid, not shown) to the rocker arm **2410** through the first fluid passageway **2411.** The hydraulic fluid then flows through the second fluid passageway **2412**. The fluid pressure created by the hydraulic fluid in the second fluid passageway **2412** overcomes the force of the spring **2425** and pushes the actuation pin **2420** to the right when the cam is at the IBC portion. It is contemplated that other means, including, but not limited to, hydraulic means, pneumatic means, electromagnetic means, mechanical means, and/or any combination of the above means, may be used to act on the actuation pin **2420** without departing from the scope of the present invention.

With the actuation pin **2420** forced to the right, the larger portion is engaged with the braking actuation piston assembly **2430.** This forces the braking actuation piston assembly **2430** in a downward direction, taking up the lash in the valve train. The cam then continues from the IBC position, and the rocker follows. Accordingly, the valve lift follows the cam profile and partial-cycle bleeder braking operation is achieved, as illustrated by the heavy line in Fig. 18. It is contemplated that other embodiments of the bleeder assembly **2400** may be used for full-cycle bleeder braking.

For the wedged-shaped embodiment discussed above, the continuous engagement of the actuation pin **2420** and the slave piston **2430** eliminates any possibility of partial engagement. In addition, it is contemplated that the actuation pin **2420** and the spring **2425** could be flipped such that the spring force is in the same direction as the centrifugal force caused by the rotating rocker **2410**. In this manner, the IRB assembly **2400** is fail-safe for both power and braking operations.

The IRB assembly **2400** of the present invention has several advantages. Because the system is simple and has fewer components, it is less expensive, easier to manufacture, and more reliable than many known bleeder braking systems. In addition, the present invention eliminates any hydraulic link. Holding a valve open to approximately 1- 2 mm may be difficult using hydraulics because compliance and leakage can change the amount of lift over time and at different temperatures. As such, the present invention also eliminates the performance issues accompanying hydraulic compliance.

### INTEGRATED ROCKER BLEEDER WITH AUTOMATIC LASH ADJUSTMENT

In another embodiment of the present invention, bleeder brake operation is achieved with an IRB assembly **2500** that provides normal valve lift during positive power cycles that automatically adjusts for valve growth, valve wear and tolerance stack-up, and that provides accurate valve lift control of at least one engine valve during engine braking. It is contemplated that the present embodiment may be used for either partial-cycle or full-cycle bleeder braking.

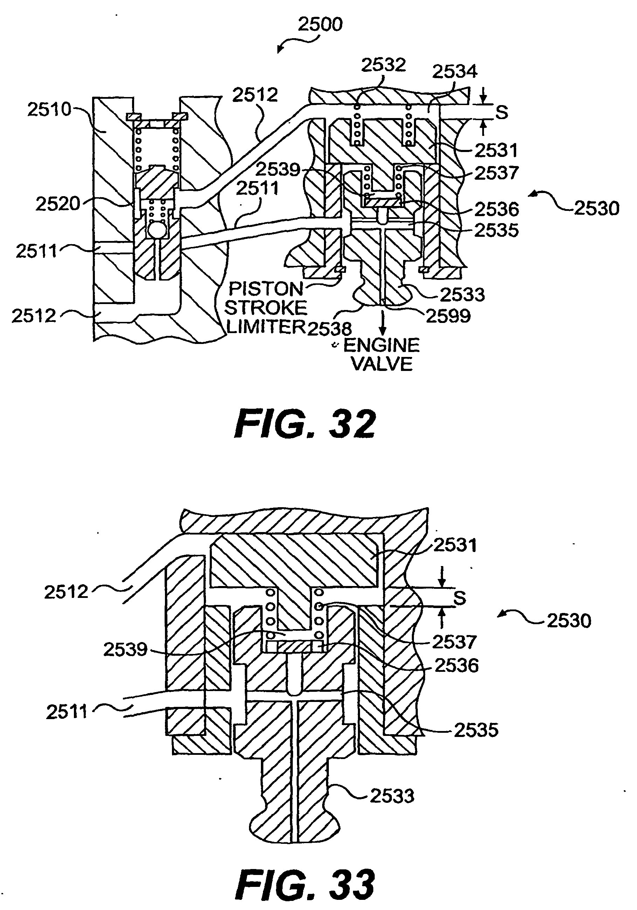

One embodiment of the IRB assembly **2500** for partial-cycle bleeder braking is shown in Fig. 32. The IRB assembly **2500** includes a rocker arm **2510**, a control valve assembly **2520**, and a braking actuation piston assembly **2530**.

The rocker arm **2510** includes a plurality of passageways, forming a hydraulic circuit therein. The passageways may include a first passageway **2511**, capable of receiving hydraulic fluid supply from a first supply valve (not shown) and a second passageway **2512**, capable of receiving hydraulic fluid supply from a second supply valve (not shown). In the preferred embodiment, the second supply valve is a braking solenoid valve. Other embodiments of the second supply valve for supplying hydraulic fluid to the second passageway **2512** are considered well within the scope of the present invention. The orientation of the first passageway 2511 and the second passageway **2512** within the rocker arm **2510** may be modified based upon such factors as engine configuration and size.

The control valve assembly **2520** is housed in a first bore formed in the rocker arm **2510**. As will be apparent to those of ordinary skill in the art, other embodiments of the control valve are considered well within the scope of the present invention.

The braking actuation piston assembly **2530** is housed in a second bore formed in the rocker arm **2510** for actuating at least one engine valve. The braking actuation piston assembly **2530** includes an upper piston **2531,** secured to the rocker arm **2510** by a first spring **2532.** An upper gap **2534** is formed between the upper piston **2531** and the rocker arm **2510**, having a height, S, which is preferably equivalent to the bleeder brake valve lift. The braking actuation piston assembly **2530** further includes a lower piston **2533,** having a contact surface **2538** for contacting the at least one engine valve. A recess **2535** may be formed within the lower piston **2533**, capable of receiving hydraulic fluid, such as, for example, engine oil therein. A spring loaded check disk **2536** is located above the lower piston **2533** and is secured to the upper piston **2531** by a second spring **2537**. The check disk **2536** forms a chamber **2539** between the lower piston **2533** and the upper piston **2531**.

The lower piston **2533** may also include a lubrication passage **2599** formed therein. The lubrication passage **2599** is adapted to provide lubrication, such as, for example, engine oil, to the contact surface **2538** between the lower piston **2533** and the engine valve bridge or stem (not shown). The lubrication passage **2599** may help prevent jacking from occurring during engine braking.

With continued reference to Fig. 32, operation of the IRB assembly **2500** during positive power will now be described. Engine oil is supplied through the first passageway **2511** past the control valve assembly **2520** into the recess **2535**. The oil pressure overcomes the force of the second spring **2537** and flows past the check disk **2536** into the chamber **2539**. The oil locked in the chamber **2539** generates a hydraulic link capable of automatically adjusting for valve growth, valve wear, and tolerance stack-up.

During positive power cycles, the braking solenoid valve is closed and no oil is supplied through the second passageway **2512** to the upper gap **2534.** As such, the upper gap **2534**, which has a height S, acts as a lash to absorb the bleeder brake valve lift. It should be noted that the first spring **2532** is adapted to have a force that is larger than the oil pressure force below it. In that manner, the height of the upper gap **2534** is not reduced undesirably. Because the extra bleeder lift is absorbed by the upper gap **2534**, the normal exhaust valve lift profile is achieved during positive power, as shown by the thin line in Fig. 18.

Operation of the IRB assembly **2500** during braking cycles will now be described. The braking solenoid valve is opened and supplies oil to the second passageway **2512.** The oil pressure created pushes the control valve assembly **2520** up and the oil is fed through the second passageway **2512** to the upper gap **2534** when the cam is at the IBC portion. As such, the engine valve lift profile now follows the cam profile with bleeder braking lift and forms a partial-cycle bleeder braking cycle, as shown by the heavy line in Fig. 18. When engine braking is no longer desired, the upper gap **2534** is drained to cause the fluid column in it to collapse. The IRB assembly **2500** then follows positive power operation, as discussed above.

In another embodiment of the IRB assembly **2500,** full-cycle bleeder braking may be achieved without altering the cam profile. The IRB assembly includes the same components, as described above, however, the design of the braking actuation piston assembly **2530** is changed, as shown in Fig. 33. The automatic valve lash adjustment is accomplished through the hydraulic link between the upper and lower pistons. During engine braking, oil pressure alone, or combined with the valve floating force, pushes the piston assembly **2530** and the braking valve(s) down to create a full-cycle bleeder braking event.

### COMPACT ROCKER BLEEDER BRAKE

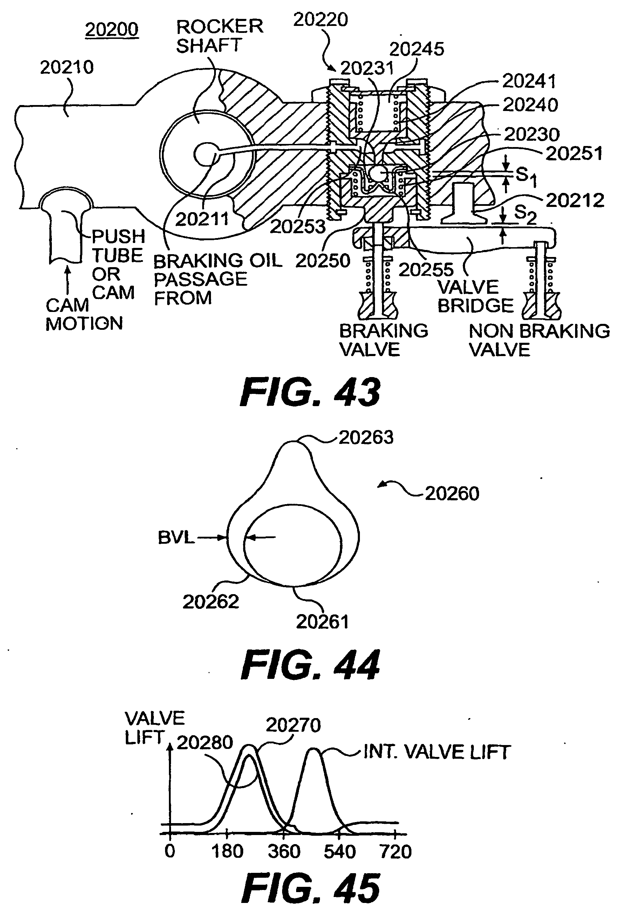

In another embodiment of the present invention, the valve actuation subsystem **200** is an integrated rocker bleeder (IRB) assembly **20200.** In the preferred embodiment, as shown ih Fig. 43, the IRB assembly **20200** includes a rocker arm **20210,** preferably, an exhaust rocker arm, a supply valve assembly (not shown), and a braking screw assembly **20220** for actuating at least one engine braking valve.

The rocker arm **20210** includes at least one fluid passageway **20211** formed therein, as shown in Fig. 43. The fluid passageway **20211** is adapted to receive engine fluid, such as, for example, oil, from the supply valve and supply the fluid to the braking screw assembly **20220**. In the preferred embodiment of the present invention, the supply valve is a three-way solenoid valve capable of selectively supplying the fluid to the fluid passageway **20211.** Other embodiments of the supply valve for supplying fluid to the rocker arm **20210,** however, are considered well within the scope of the present invention. The orientation of the at least one fluid passageway **20211** within the rocker arm **20210** may be modified based upon such factors as engine configuration and size. The motion of the rocker arm **20210** is preferably derived from the motion of a cam **20260,** as shown in Fig. 44. In the alternative, as will be apparent to those of ordinary skill in the art, the motion of the rocker arm **20210** may be derived from a push tube assembly.

The rocker arm **20210** further includes a valve bridge actuation assembly **20212** formed therein for contacting an engine valve bridge, which in turn, actuates the at least one engine braking valve and at least one engine non-braking valve. As shown in Fig. 43, the valve bridge actuation assembly **20212** is formed such that a lash equal to a height of S₂ exists between the valve bridge actuation assembly **20212** and the valve bridge itself. The height S₂ is preferably equal to or greater than the braking valve lift such that, during positive power operation, the braking valve lift is absorbed and the non-braking engine valve achieves the desired normal valve lift.

The braking screw assembly **20220** is housed in a bore formed in the rocker arm **20210**, as shown in Fig. 43. The braking screw assembly **20220** preferably comprises a check valve **20230**, a brake plunger **20240**, and a braking acutation piston **20250**. A first chamber **20245** is formed between the brake plunger 20240 and the top of the braking screw assembly **20220**. A second chamber **20255** is formed between the braking actuation piston **20250** and the check valve **20230**. An area **20253** is also formed between the brake plunger **20240** and the check valve **20230**.

The check valve **20230,** preferably a ball check valve, is biased upwards against the bottom end of the brake plunger **20240** by a spring **20231**. During engine braking operation, when the brake plunger **20240** is pushed away (upwards) by engine fluid pressure, the check valve **20230** is biased upwards against its seat The brake plunger **20240** is biased downwards against its seat and the check valve **20230** by a spring **20241** to form a normal open position for non-braking operation. The braking actuation piston **20250** is biased downwards against the engine valve by a spring **20251** such that the rocker arm **20210** and the engine valve remain in contact all the time. This arrangement helps to avoid rocker flipping that may occur due to the valve lash S₂.

As shown in Fig. 43, a gap equal to a height of S₁, which is preferably the height of the braking valve lift, is formed between the braking actuation piston **20250** and the rocker arm **20210**.

Operation of the IRB assembly **20200** of the present invention during engine braking will now be described. Fig. 45 illustrates the braking valve lift profile **20270** and the non-braking valve lift profile **20280** that may be experienced with the preferred embodiment of the IRB assembly **20200**.

Engine fluid is supplied from the supply valve to the rocker arm **20210** through the fluid passageway **20211**. As the engine fluid fills the fluid passageway **20211** and the area **20253**, the fluid pressure pushes the brake plunger **20245** upwards, separating it from the check valve **20230**. Simultaneously, the fluid pressure pushes the check valve **20230** downwards and the engine fluid fills the chamber **20255**. The filling of the chamber **20255** preferably occurs while the cam is at its inner base circle (IBC) portion during most of the intake valve lift period. The cam IBC portion is illustrated by the lobe portion **20261**, as shown in Fig. 44.

Once the chamber **20255** is filled with fluid, the bias of the spring **20231** pushes the ball of the check valve **20230** back to its seat, separating the fluid in the area **20253** from the chamber **20255**. This creates a hydraulic link between the braking actuation piston **20250** and the check valve **20230**. As the cam **20260** rotates, the rocker arm **20210** rotates around the rocker shaft and the braking actuation piston **20250** actuates the braking valve. As illustrated by the braking valve lift profile **20270** in Fig. 45 and the lobe portion **20262** in Fig. 44, the braking valve lift begins around bottom dead center (BDC) of the intake valve closing (IVC). Because of the preset lash S₂ between the valve bridge and the valve bridge actuation assembly **20212,** the cam lobe portion **20262** does not cause the valve bridge actuation assembly **20212** to actuate the non-braking valve.

As the cam **20260** continues to rotate, the braking valve is held open by the hydraulic link between the braking actuation piston **20250** and the check valve **20230.** When the cam **20260** reaches the cam lobe portion **20263** for the main exhaust event, the valve bridge actuation assembly **20212** contacts the valve bridge and opens the braking valve and the non-braking valve. As the cam **20260** returns to the IBC **20261**, the braking valve and the non-braking valve re-seat. Once the valves are seated, it is contemplated that additional fluid could refill the hydraulic circuit to compensate for any leakage that may have occurred during engine braking operation. The braking event continues cycle by cycle until the braking-off signal is issued. At this point, the braking fluid is dumped to the ambient through the supply valve.

During positive power operation, the supply valve shuts off and no fluid is delivered to the rocker arm **20210**. Without fluid pressure in the area **20253**, the brake plunger **20240** moves down by the bias of the spring **20241** and pushes the check valve **20230** off its seat. The fluid in the chamber **20255** is drained, breaking the hydraulic link between the braking actuation piston **20250** and the check valve **20230**. As the cam **20260** rotates, this allows the braking actuation piston **20250** to move up a distance S₁. Because of the lash S₂ between the valve bridge and the valve bridge actuation assembly **20212,** the braking valve lift on the cam **20260** is absorbed. Thus, during positive power operation, only normal exhaust valve lift is achieved, as illustrated by the non-braking valve lift profile **20280** in Fig. 45. It is contemplated that lubrication may be provided to the braking actuation piston **20250** and the valve bridge actuation assembly **20212**.

The IRB assembly **20200** of the present invention has several advantages over known engine braking systems. Because the system is simple and combines multiple functionality into one screw assembly, it is less expensive, and easier to manufacture than many known bleeder braking systems. Moreover, given the reduced valve lift of the present bleeder braking system, as compared with the valve lifts of known compression release braking systems, the present invention reduces valve bridge tilt and side loading, and the potential of valve to piston contact. This leads to a more reliable braking system. Furthermore, the present invention reduces the exhaust and intake valve overlap to improve braking performance.

### BLEEDER BRAKE WITH COLLAPSIBLE ADJUSTING SCREW

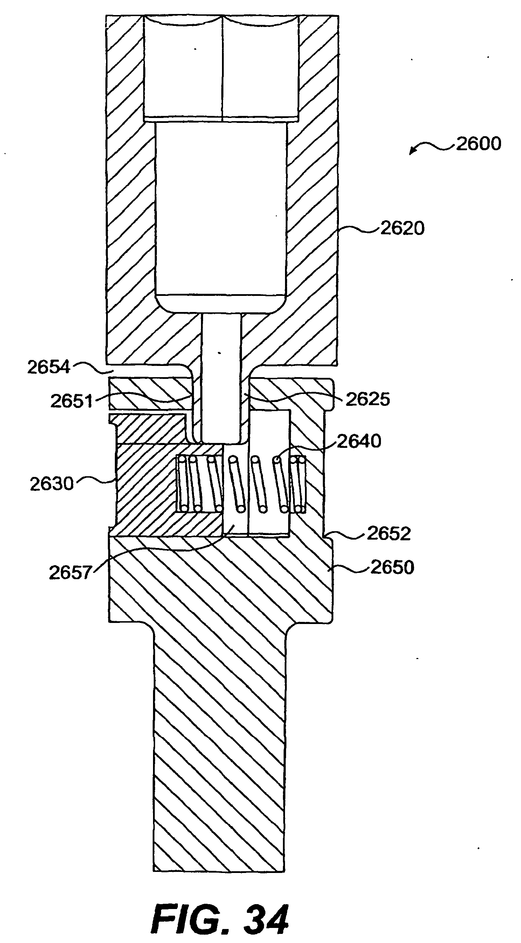

In another embodiment of the present invention, bleeder brake operation is achieved with a mechanical bleeder assembly **2600**, as shown in Fig. 34, that is hydraulically actuated, but maintains the valve lift for at least one engine valve with a mechanical lock. It is contemplated that embodiments of the bleeder assembly **2600** may be used for either partial-cycle or full-cycle bleeder braking.

For partial-cycle bleeder braking, the bleeder assembly **2600** includes a rocker arm **2610** (not shown), an adjusting screw **2620**, a locking piston **2630**, a return spring **2640**, and a collapsible piston **2650**.

The rocker arm **2610** includes a bore, formed therein at the end, that is drilled, reamed, and tapped to a desired depth for receiving the components of the bleeder assembly **2600** and such that the collapsible piston **2650** has a typical piston fit therein. The rocker arm **2610** is driven by a cam (not shown) having a cam profile designed with a bleeder lift of approximately 1 mm for achieving partial-cycle bleeder brake operation.

The adjusting screw **2620** threads into the bore at the end of the rocker arm **2610**. The adjusting screw **2620** includes a protrusion **2625** extending from the bottom of the adjusting screw **2620**, as shown in Fig. 34.

The collapsible piston **2650** is received in the bore of the rocker arm **2610** and includes a cutout 2651 that receives the protrusion **2625** of the adjusting screw **2620.** A locking volume **2657** where the collapsible piston **2650** is adapted to slide with respect to the adjusting screw **2620** is also formed therein. The collapsible piston **2650** further includes an annular portion **2652**, forming an annulus around the collapsible piston **2650**. A gap **2654** is also formed between the collapsible piston **2650** and the adjusting screw **2620**. The annular portion **2652** is in fluid communication with the gap **2654**.

The locking piston **2630** is located in the annular portion **2652** of the collapsible piston **2650,** and has an annular portion equivalent in diameter to the annulus around the collapsible piston **2650**, as shown in Fig. 34. The return spring **2640** is secured to the locking piston **2630** and biases the locking piston **2630** against the bore of the rocker arm **2610**. Against the force of the return spring **2640**, the locking piston **2630** is slidably moveable within the locking volume **2657**.

Operation of the bleeder assembly **2600** during positive power will now be described. During positive power, the return spring **2640** biases the locking piston **2630** against the bore of the rocker arm **2610.** As the cam pushes the rocker arm **2610**, the collapsible piston **2650** contacts the at least one engine valve, but the collapsible piston **2650** collapses into the gap **2654**, preventing the at least one engine valve from actuating. The bleeder assembly **2600** is adjusted such that the distance that the collapsible piston **2650** collapses is equal to the desired lash, i.e., the bleeder valve lift plus any desired valve growth. For example, if the bleeder valve lift is to be approximately 1 mm, and valve growth is measured to be approximately 0.25 mm, the bleeder assembly may be adjusted such that the collapsible piston **2650** collapses approximately 1.25mm. The collapsing of the collapsible piston **2650** effectively eliminates any brake motion during positive power. As the cam continues to rotate, the entire lash is absorbed and the actuator portion **2653** eventually actuates the at least one engine valve for a main exhaust event. As such, a normal exhaust valve lift profile is achieved during positive power.

Operation of the bleeder assembly **2600** during engine braking will now be described. When engine braking is required, a supply valve (not shown) communicates hydraulic fluid through a hydraulic circuit formed in the rocker arm **2610** to the bleeder assembly. In the preferred embodiment of the present invention, the hydraulic fluid is engine oil and the supply valve is a solenoid valve.

The engine oil acts to pressurize the annular portion **2652**. This pressure acts against the force of the return spring **2640** and causes the locking piston **2630** to begin to slide into the locking area **2657**. Simultaneously, the oil travels into the gap **2654** between the collapsible piston **2650** and the adjusting screw **2620**. This causes the collapsible piston **2650** and the adjusting screw **2620** to separate from each other and allows the locking piston **2630** to move into the locking area **2657** and into a locked position. In this position the collapsible piston **2650** cannot collapse because the locking piston **2630** abuts the protrusion **2625** which translates load through it.

With the collapsible piston **2650** extended there is no brake lash and the collapsible piston **2650** contacts the at least one engine valve. The cam rotates and the rocker **2610** follows. As such, the bleeder assembly **2600** follows the cam profile to achieve a partial-cycle bleeder brake operation.

The bleeder assembly **2600** of the present invention has several advantages over known bleeder brakes. Because the system is simple and has fewer components, it is less expensive, and easier to manufacture than many known bleeder braking systems. Moreover, given the sufficient contact area of the collapsible piston **2650** and the relatively small brake lift, the impact stresses are low and the bleeder assembly **2600** is more reliable. In addition, the present invention eliminates any hydraulic link. Holding a valve open to approximately 1-2 mm is difficult using hydraulics because compliance and leakage can change the amount of lift over time and at different temperatures. As such, the present invention also eliminates the performance issues accompanying hydraulic compliance.

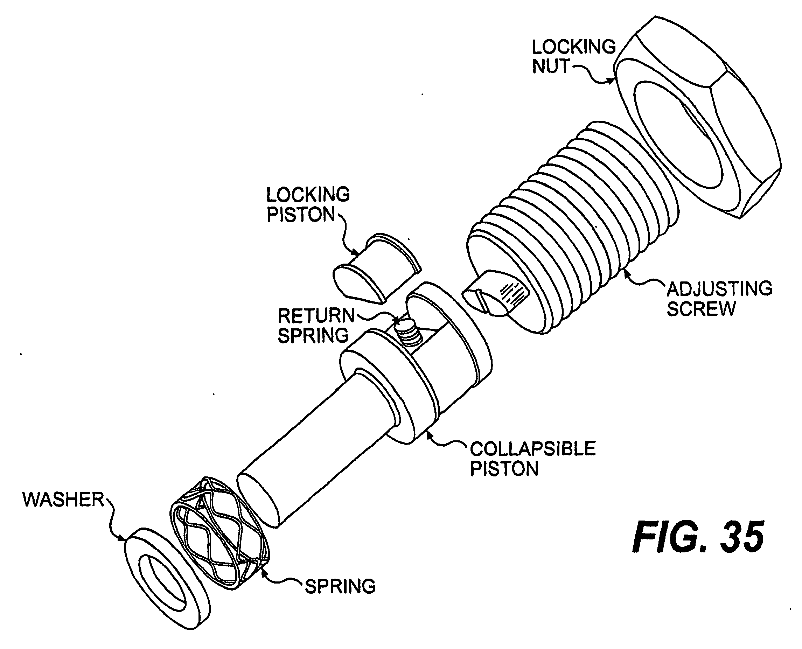

In an alternative embodiment, as shown in Fig. 35, the bleeder assembly **2600** may be slightly modified for full-cycle bleeder brake operation. The bleeder assembly **2600** may be threaded into a bolt-on brake housing (not shown) rather than the rocker arm **2610** and positioned above the at least one engine valve, or in the alternative, an exhaust rocker. In addition, the bleeder assembly **2600** may further include a light spring located around the collapsible piston **2650**. During positive power, the bleeder assembly **2600** does not follow the motion of the cam because it is no longer housed in the rocker arm **2610.** Rather, the spring **2680** holds the collapsible piston **2650** in the brake housing and a typical brake lash is set to allow for valve growth. As such, positive power is not affected and the valve profile includes a main exhaust event. During engine braking operation, the bleeder assembly **2600** functions as described above.

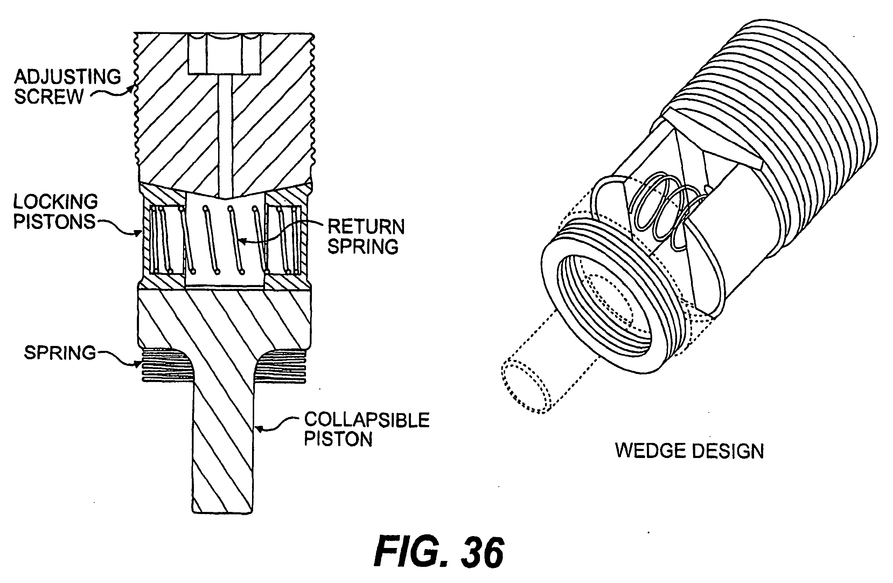

In an alternative embodiment, as shown in Fig. 36, the bleeder assembly **2600** may be slightly modified for partial or full-cycle bleeder operation by using two wedge-shaped locking pistons **2630**. This design does not require hydraulic pressure to separate the collapsible piston **2650** and the adjusting screw **2620**. Rather, the locking pistons **2630** mechanically separate the components as the they slide into the locking volume **2654**. The continuous engagement of the locking pistons **2630** eliminates any possibility of partial engagement.

### PARTIAL-CYCLE BLEEDER BRAKE BY INTAKE VALVE RETURN MOTION

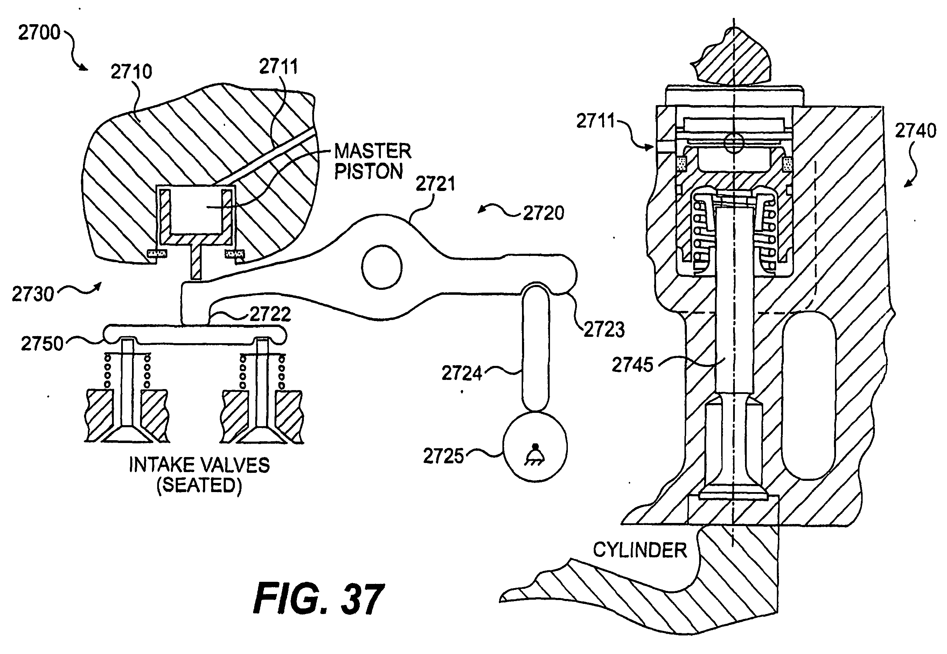

In another embodiment of the present invention, the valve actuation subsystem **200** is a bolt-on bleeder brake assembly **2700** that utilizes intake valve return motion to achieve a partial-cycle bleeder brake operation. In the preferred embodiment, as shown in Fig. 37, the bleeder brake assembly includes a housing **2710**, an intake rocker assembly **2720**, a master piston assembly **2730** located in a first bore formed in the housing **2710**, and a slave piston assembly **2740**. The housing **2710** includes at least one passageway **2711** formed therein for hydraulic communication between the master piston assembly **2730** and the slave piston assembly **2740.**

The intake rocker assembly **2720** indudes an intake rocker arm **2721** having a first end **2722** and a second end **2723**. The first end **2722** of the intake rocker arm **2721** is in contact with the master piston assembly **2730** and an intake valve bridge **2750** which actuates at least one intake engine valve. The intake rocker assembly **2720** further includes a push tube assembly **2724** having a first end in contact with an intake cam **2725** and a second end in contact with the second end **2723**. Other means for driving the intake rocker assembly **2720** are considered within the scope of the present invention. For example, it is contemplated that the intake rocker may be directly driven by the cam **2725**.

The slave piston assembly **2740** is located in a second bore formed in the housing **2710.** The slave piston assembly **2740** includes an actuation piston **2745** for actuating at least one engine exhaust valve. In the preferred embodiment of the present invention, the at least one engine exhaust valve is a dedicated fifth braking valve. It is contemplated, however, that the bleeder brake assembly **2700** could be modified to open at least one regular engine exhaust valve. These modifications would include the addition of a control valve (not shown) between the master piston assembly **2730** and the slave piston assembly **2740** in order to hold the higher braking load from the regular exhaust valve.

Operation of the bleeder brake assembly **2700** during engine braking operation will now be described. As the intake cam **2725** pushes the intake rocker arm **2721**, the intake rocker arm **2721** rotates causing the first end **2722** to push down the intake valve bridge **2750**, which in tum actuates the at least one engine intake valve. As the intake valves open, the master piston assembly **2730** is pushed out by oil pressure in the passageway **2711**. As the intake valves return, the intake valve bridge **2750** pushes the first end **2722** of the intake rocker arm **2721** up. The first end **2722** of the intake rocker arm **2721** transfers this motion to the master piston assembly **2730**. Through the hydraulic fluid in the passageway **2711**, the master piston assembly **2730** transfers the motion to the slave piston assembly **2740.** The hydraulic fluid pressure, in turn, causes the actuation piston **2745** to actuate the at least one exhaust valve. The timing and magnitude of the bleeder valve lift can be controlled by the hydraulic ratio in the passageway **2711** and/or by the lash between the actuation piston **2745** and the at least one exhaust valve. The fact that two intake valves are actuating (preferably) one exhaust valve is also considered when overcoming the braking load from the fifth braking valve.

After the intake valves return to their seats, the bleeder valve lift is held constant until the intake valves open again. At this point, the master piston assembly **2730** again follows the intake valve motion, causing the hydraulic link in the passageway **2711** to break, and the slave piston assembly **2740** and the exhaust valve(s) to re-seat. The valve lift profile for the bleeder brake assembly **2700** is illustrated in Fig. 18.

Other embodiments of the valve actuation system **200** are considered within the scope of the present invention:

### AIR ACTUATED, MECHANICALLY LOCKED FULL-CYCLE BLEEDER BRAKE

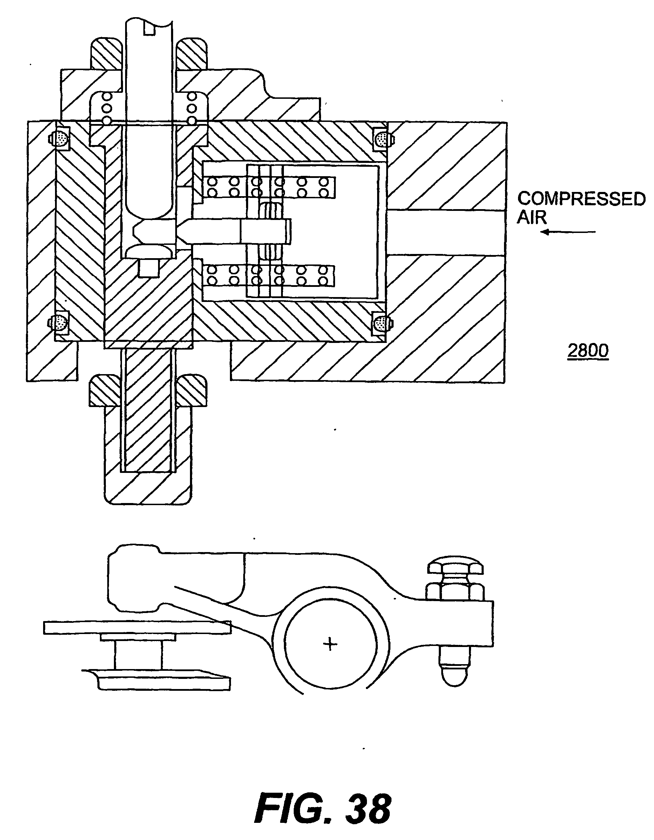

In another embodiment of the present invention, the valve actuation subsystem **200** is a bleeder brake assembly **2800**, as shown in Fig. 38, that is actuated by compressed air generated by the air compressor of the vehicle and that mechanically locks open at least one engine valve during braking. The bleeder brake assembly **2800** also provides cold startability aid during cold start cranking of the engine.

### COMPACT FULL-CYCLE BLEEDER MECHANISM

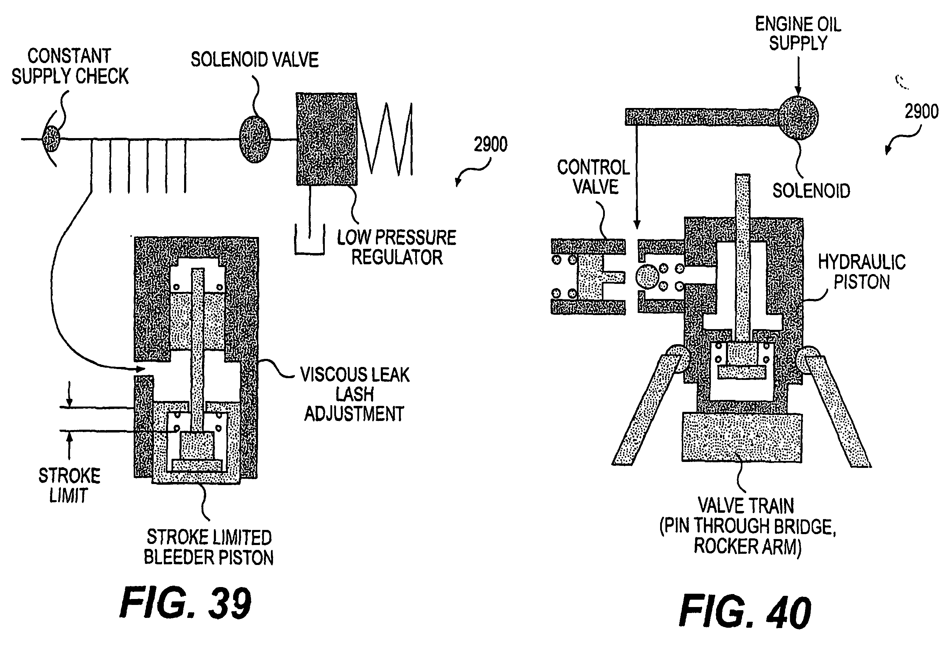

In another embodiment of the present invention, the valve actuation subsystem **200** is a compact bleeder brake assembly **2900** with lash adjustment for accomplishing full-cycle bleeder brake operation, as shown in Figs. 39 and 40.

### BLEEDER BRAKE SYSTEM FOR INTERNAL COMBUSTION ENGINES (FULL-CYCLE BLEEDER)

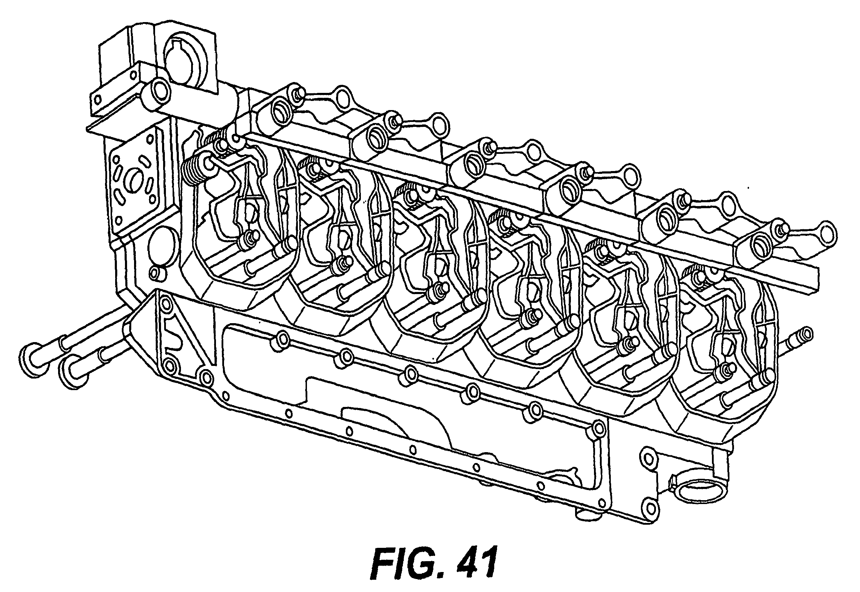

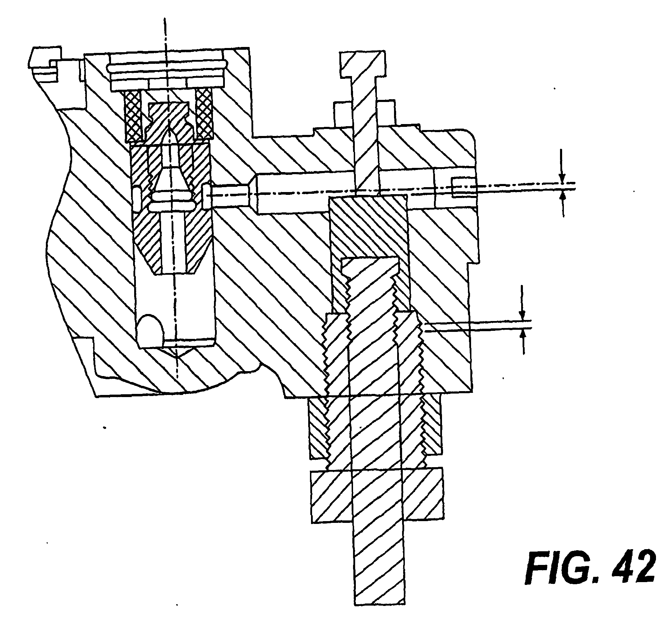

In another embodiment of the present invention, the valve actuation subsystem **200** is a bolt-on bleeder brake assembly **20100**. The bleeder brake assembly **20100** includes a plurality of brake housing assemblies, a supply valve assembly, and an actuator piston assembly, as shown in Figs. 41 and 42.

While this invention has been described in conjunction with specific embodiments thereof, it is evident that many alternatives, modifications and variations will be apparent to those skilled in the art. Accordingly, the preferred embodiments of the invention as set forth herein we intended to be illustrative, not limiting. Various changes may be made without departing from the spirit and scope of the invention as defined in the following claims.

## Claims

1. A method of controlling the level of engine braking in an engine having at least one intake and exhaust valve, intake and exhaust manifolds, a turbocharger connected to the intake and exhaust manifolds, and an engine cylinder, said method comprising the steps ot
actuating the at least one exhaust valve to produce a bleeder braking event;
determining a first engine parameter level; and
generating exhaust gas back pressure in the exhaust manifold responsive to the level of the first engine parameter,
wherein the generated exhaust gas back pressure communicates with the engine cylinder during the bleeder braking event to control the level of engine braking.

2. The method of Claim 1, wherein the first engine parameter comprises engine speed.

3. The method of Claim 1. wherein the step of generating exhaust gas pressure comprises the step of controlling the flow of exhaust gas through the turbocharger in response to the first engine parameter level.

4. The method of Claim 3, wherein the turbocharger comprises a variable geometry turbocharger (VGT), and the step of controlling the flow of exhaust gas through the turbocharger comprises the step of dosing the geometry of the VGT to a first position.

5. The method of Claim 4, wherein the first position comprises a position less than approximately 40% open.

6. The method of Claim 4, wherein the first position comprises a position equal to approximately 20% open.

7. The method of Claim 4, wherein the first position comprises a position in the range of approximately 15% open to approximately 40% open.

8. The method of Claim 4, wherein the first position comprises a nearly fully closed position.

9. The method of Claim 4, further comprising the steps of:
providing a pressure regulation valve coupled to the exhaust manifold;
controlling the pressure regulation valve to modify a pressure gradient across the turbocharger, and
opening the VGT geometry from the first position without experiencing VGT control instability.

10. The method of Claim 9, wherein the pressure regulation valve comprises a waste gate.

11. The method of Claim 9, wherein the pressure regulation valve comprises an exhaust restrictor.

12. The method of Claim 4, further comprising the steps of:
providing a pressure regulation valve coupled to the intake manifold;
controlling the pressure regulation valve to modify the pressure in the intake manifold; and
opening the VGT geometry from the first position without experiencing VGT control instability.

13. The method of Claim 1, further comprising the steps of:
providing a pressure regulation valve coupled to at least one of the
exhaust manifold and the intake manifold;
determining a second engine parameter level; and if the level of the second engine parameter exceeds a predetermined value, controlling the pressure regulation valve to reduce the pressure in the exhaust manifold.

14. The method of Claim 13, wherein the second engine parameter comprises exhaust manifold pressure.

15. The method of Claim 13. wherein the second engine parameter comprises exhaust manifold temperature.

16. The method of Claim 13, wherein the second engine parameter comprises turbocharger speed.

17. The method of Claim 13, wherein the second engine parameter comprises engine cylinder pressure.

18. The method of Claim 13. wherein the second engine parameter comprises engine cylinder temperature.

19. The method of Claim 1, further comprising the step of carrying out an exhaust gas recirculation event responsive to the level, of the first engine parameter.

20. The method of Claim 1. wherein the bleeder braking event is selected from the group braking event

21. The method of claim 1. wherein the engine has a variable geometry turbocharger (VGT) connected to the intake and exhaust manifolds, a pressure regulation valve coupled to at least one of the intake and exhaust manifolds, and an engine cylinder, said method comprising the steps of:
actuating the at least one exhaust valve to produce a bleeder braking event;
determining a first engine parameter level;
closing the geometry of the VGT to a braking position to generate exhaust gas back pressure in the exhaust manifold responsive to the level of the first engine parameter, wherein the generated exhaust gas back pressure communicates with the engine cylinder during the bleeder braking event to control the level of engine braking:
determining a second engine parameter level; and
controlling the pressure regulation valve responsive to the level of the second engine parameter level.

22. The method of Claim 21, further comprising the steps of:
controlling the pressure regulation valve to modify the pressure in at least one of the exhaust manifold and the intake manifold; and
opening the VGT geometry from the first position without experiencing VGT control instability.

23. The method of claim 1 for controlling the braking of an engine having intake and exhaust manifolds and at least one intake and exhaust valve, comprising:
actuating the at least one engine exhaust valve to produce a bleeder braking event;
determining a desired level of engine braking;
controlling the geometry of a variable geometry turbocharger connected to the intake and exhaust manifolds responsive to the desired level of engine braking;
regulating the exhaust manifold pressure; and controlling the pressure gradient across the variable geometry turbocharger to avoid VGT control instability.

24. The method of Claim 23, wherein the step of determining a desired level of engine braking further comprises the step of measuring a first engine parameter.

25. The method of Claim 24, wherein the first engine parameter is engine speed.

26. The method of Claim 24, wherein the step of regulating the exhaust manifold pressure further comprises the steps of:
determining whether a second engine parameter exceeds a value; and
controlling at least one pressure regulation valve to regulate the exhaust manifold pressure.

27. The method of Claim 26, wherein the second engine parameter is selected from the group consisting of: exhaust manifold pressure, exhaust manifold temperature, the speed of the turbocharger, engine cylinder pressure, and engine cylinder temperature.

28. A system for controlling the bleeder braking of an engine according to the method of any one of claims 1 to 27, wherein the engine has at least one intake and exhaust valve, intake and exhaust manifolds, a turbocharger connected to the intake and exhaust manifolds, and an engine cylinder, and further comprising:
pressure regulating means for regulating the pressure of at least one of the intake and exhaust manifolds;
valve actuation means for actuating the at least one intake and exhaust valve during an engine bleeder braking valve event; and
control means for controlling said pressure regulating means and said valve actuation means during the engine bleeder braking valve event,
wherein the engine bleeder braking valve event comprises a valve event selected from the group consisting of: a full-cycle bleeder braking valve event, and a partial-cycle bleeder braking valve event

29. The system of Claim 28, wherein said pressure regulating means further comprises:
a turbocharger connected to the intake and exhaust manifolds, wherein said turbocharger is adapted to change the flow of exhaust gases through the turbocharger, and
at least one pressure regulation valve coupled to the exhaust manifold.

30. The system of Claim 29, wherein said turbocharger is a variable geometry turbocharger.

31. The system of Claim 28, wherein the valve actuation means further includes means for initiating valve lift of the at least one engine valve selected from the group consisting of: mechanical means, pneumatic means, electromagnetic means, valve float means, high-pressure hydraulic means, and low-pressure hydraulic means.

32. The system of Claim 28. wherein the valve actuation means further includes means for maintaining valve lift of the at least one engine valve selected from the group consisting of: mechanical means, high-pressure hydraulic means, and low-pressure hydraulic means.

## Patentansprüche

1. Verfahren zum Steuern des Ausmaßes einer Motorbremsung in einem Motor, der mindestens ein Einlass- und Auslassventil, Einlass- und Auslassverteiler, einen Turbolader, der mit den Einlass- und Auslassverteilern verbunden ist, und einen Motorzylinder enthält, wobei das Verfahren die folgenden Verfahrensschritte aufweist:
Betätigen des mindestens einen Auslassventils, um einen Ablass-Bremsungsvorgang zu erzeugen;
Bestimmen eines Levels eines ersten Motor-Parameters; und
Erzeugen eines Auslass-Gas-Gegendrucks im Auslassverteiler in Abhängigkeit des Levels des ersten Motorparameters,
wobei der erzeugte Auslass-Gas-Gegendruck mit dem Motorzylinder während des Ablassbremsungsvorgangs kommuniziert, um das Ausmaß der Motorbremsung zu steuern.

2. Verfahren nach Anspruch 1, wobei der erste Motorparameter die Motorgeschwindigkeit umfasst.

3. Verfahren nach Anspruch 1, wobei der Verfahrensschritt des Erzeugens eines Auslass-Gas-Drucks den Verfahrensschritt des Steuerns der Strömung des Auslassgases durch den Turbolader in Abhängigkeit vom Level des ersten Motorparameters umfasst.

4. Verfahren nach Anspruch 3, wobei der Turbolader einen Turbolader variabler Geometrie (VGT) umfasst, und der Verfahrensschritt des Steuems der Strömung des Auslassgases durch den Turbolader den Verfahrensschritt des Dosierens der Geometrie des VGT zu einer ersten Position umfasst.

5. Verfahren nach Anspruch 4, wobei die erste Position eine Öffnungsposition von weniger als etwa 40 % umfasst.

6. Verfahren nach Anspruch 4, wobei die erste Position eine Öffnungsposition von etwa gleich 20 % umfasst.

7. Verfahren nach Anspruch 4, wobei die erste Position eine Öffnungsposition im Bereich von etwa 15 % bis etwa 40 % umfasst.

8. Verfahren nach Anspruch 4, wobei die erste Position eine nahezu vollständig geschlossenen Position umfasst.

9. Verfahren nach Anspruch 4, ferner umfassend die folgenden Verfahrensschritte:
Vorsehen eines Druckregulierungsventils, das mit dem Auslassverteiler gekoppelt ist;
Steuern des Druckregulierungsventils um den Druckgradienten über den Turbolader zu modifizieren; und
Öffnen der VGT-Geometrie von der ersten Position ohne Wahmehmung einer VGT-Steuerinstabilität.

10. Verfahren nach Anspruch 9, wobei das Druckregulierungsventil einen Ablassausgang aufweist.

11. Verfahren nach Anspruch 9, wobei das Druckregulierungsventil einen Auslass-Begrenzer aufweist.

12. Verfahren nach Anspruch 4, ferner umfassend die folgenden Verfahrensschritte:
Vorsehen eines Druckregulierungsventils, gekoppelt mit dem Einlassverteiler;
Steuern des Druckregulierungsventils um den Druck im Einlassverteiler zu modifizieren; und
Öffnen der VGT-Geometrie von der ersten Position ohne Wahmehmung einer VGT-Steuerinstabilität.

13. Verfahren nach Anspruch 1, ferner umfassend die folgenden Verfahrensschritte:
Vorsehen eines Druckregulierungsventils, gekoppelt mit dem Auslassverteiler und/oder dem Einlassverteiler;
Bestimmen eines Levels eines zweiten Motorparameters, und wenn der Level des zweiten Motorparameters einen vorbestimmten Wert übersteigt, Steuern des Druckregulierungsventils, um den Druck im Auslassverteiler zu reduzieren.

14. Verfahren nach Anspruch 13, wobei der zweite Motorparameter einen Auslassverteilerdruck umfasst.

15. Verfahren nach Anspruch 13, wobei der zweite Motorparameter eine Auslassverteilertemperatur umfasst.

16. Verfahren nach Anspruch 13, wobei der zweite Motorparameter eine Geschwindigkeit des Turboladers umfasst.

17. Verfahren nach Anspruch 13, wobei der zweite Motorparameter einen Motorzylinderdruck umfasst.

18. Verfahren nach Anspruch 13, wobei der zweite Motorparameter eine Motorzylindertemperatur umfasst.

19. Verfahren nach Anspruch 1, ferner umfassend den Verfahrensschritt des Ausführens eines Auslassgas-Rückführungsvorganges in Abhängigkeit vom Level des ersten Motorparameters.

20. Verfahren nach Anspruch 1, wobei der Ablassbremsungsvorgang ausgewählt wurde aus dem Gruppenbremsungsvorgang.

21. Verfahren nach Anspruch 1, wobei der Motor einen Turbolader variabler Geometrie (VGT) der mit den Einlass- und Auslassverteilern verbunden ist, ein Druckregulierungsventil, das mit dem Einlass- und/oder dem Auslassverteiler gekoppelt ist, und einen Motorzylinder aufweist, wobei das Verfahren die folgenden Verfahrensschritte aufweist:
Betätigen mindestens eines Auslassventils, um einen Auslassbremsungsvorgang zu erzeugen;
Bestimmen eines Levels eines ersten Motorparameters;
Schließen der Geometrie des VGT zu einer Bremsposition, um einen Auslass-Gas-Gegendruck im Auslassverteiler in Abhängigkeit vom Level des ersten Motorparameters zu erzeugen; wobei der erzeugte Auslass-Gas-Gegendruck mit dem Motorzylinder während des Ablassbremsvorganges kommuniziert, um das Ausmaß der Motorbremsung zu steuern;
Bestimmen eines Levels eines zweiten Motorparameters; und
Steuern des Druckregulierungsventils in Abhängigkeit vom Level des zweiten Motorparameterlevels.

22. Verfahren nach Anspruch 21 ferner umfassend die folgenden Verfahrensschritte:
Steuern des Druckregulierungsventils, um den Druck im Auslassverteiler und/oder im Einlassverteiler zu modifizieren; und
Öffnen der VGT-Geometrie von der ersten Position ohne eine VGT-Steuerinstabilität wahrzunehmen.

23. Verfahren nach Anspruch 1 zum Steuern des Bremsens eines Motors, der Einlass- und Auslassverteiler und mindestens ein Einlass- und Auslassventil aufweist, das umfasst:
Betätigen des mindestens einen Motorauslassventils um einen Ablassbremsungsvorgang zu erzeugen;
Bestimmen eines gewünschten Ausmaßes einer Motorbremsung;
Steuern der Geometrie eines Turboladers mit variabler Geometrie, der mit den Einlass- und Auslassverteilern verbunden ist, in Abhängigkeit mit dem gewünschten Ausmaß der Motorbremsung;
Regulieren des Auslassverteilerdrucks; und
Steuern des Druckgradienten über den Turbolader variabler Geometrie, um eine VGT-Steuerinstabilität zu vermeiden.

24. Verfahren nach Anspruch 23, wobei der Verfahrensschritt des Bestimmens eines gewünschten Ausmaßes einer Motorbremsung ferner den Verfahrensschritt des Messens eines ersten Motorparameters umfasst.

25. Verfahren nach Anspruch 24, wobei der erste Motorparameter eine Motorgeschwindigkeit ist.

26. Verfahren nach Anspruch 24, wobei der Verfahrensschritt des Regulierens des Auslassverteilerdrucks ferner die folgenden Verfahrensschritte aufweist:
Bestimmung, ob ein zweiter Motorparameter einen Wert übersteigt; und
Steuern mindestens eines Druckregulierungsventils, um den Auslassverteilerdruck zu regulieren.

27. Verfahren nach Anspruch 26, wobei der zweite Motorparameter aus einer Gruppe ausgewählt wird, die aus dem Auslassverteilerdruck, der Auslassverteilertemperatur, der Turboladergeschwindigkeit, dem Motorzylinderdruck und der Motorzylindertemperatur besteht.

28. System zum Steuern der Ablassbremsung eines Motors nach dem Verfahren nach einem der Ansprüche 1 bis 27, wobei der Motor mindestens ein Einlass- und Auslassventil, Einlass- und Auslassverteiler, einen Turbolader, der mit den Einlass- und Auslassverteilern verbunden ist, und einen Motorzylinder umfasst, und ferner enthält:
Druckregulierungsmittel zum Regulieren des Drucks des Einlass- und/oder Auslassverteilers;
Ventilbetätigungsmittel zum Betätigen des Einlass- und/oder Auslassventils während eines Motor-Ablassbremsungs-Ventilvorgangs; und
eine Steuereinrichtung zum Steuern der Druckregulierungsmittel und der Ventilbetätigungsmittel während des Motor-Ablassbremsungs-Ventilvorgangs, wobei der Motor-Ablassbremsungs-Ventilvorgang einen Ventilvorgang umfasst, der ausgewählt wird aus der Gruppe, die aus einem Volltakt-Ablassbremsungs-Ventilvorgang und einem Teiltakt-Ablassbremsungs-Ventilvorgang besteht.

29. System nach Anspruch 28, wobei die Druckregulierungseinrichtung ferner umfasst:
Einen Turbolader, der mit den Einlass- und Auslassverteilern verbunden ist, wobei der Turbolader so ausgebildet ist, dass er die Strömung des Auslassgases durch den Turbolader ändert; und
mindestens einem Druckregulierungsventil, das mit dem Auslassverteiler gekoppelt ist.

30. System nach Anspruch 29, wobei der Turbolader ein Turbolader variabler Geometrie ist.

31. System nach Anspruch 28, wobei die Ventilbetätigungseinrichtung ferner eine Einrichtung zum Bewirken eines Ventilhubs des mindestens einen Motorventils umfasst, die aus der Gruppe ausgewählt wurde, die aus einer mechanischen Einrichtung, einer pneumatischen Einrichtung, einer elektromagnetischen Einrichtung, einer Ventilschwimmereinrichtung, einer Hochdruckhydraulikeinrichtung und einer Niederdruckhydraulikeinrichtung besteht.

32. System nach Anspruch 28, wobei die Ventilbetätigungseinrichtung ferner eine Einrichtung zum Aufrechterhalten eines Ventilhubs mindestens eines Motorventils enthält, die ausgewählt wurde aus der Gruppe, die aus mechanischen Einrichtungen, Hochdruckhydraulikeinrichtungen und Niederdruckhydraulikeinrichtungen besteht.

## Revendications

1. Méthode pour commander le niveau de freinage dans un moteur comportant au moins une soupape d'admission et d'échappement, des collecteurs d'admission et d'échappement, un turbocompresseur relié auxdits collecteurs et un cylindre de moteur, comprenant les étapes qui consistent à :
- actionner la ou les soupapes d'échappement pour produire un événement de freinage par purge ;
- déterminer un niveau de premier paramètre de moteur ; et
- produire une contre-pression de gaz d'échappement dans le collecteur d'échappement en réaction au niveau du premier paramètre de moteur,
la contre-pression de gaz d'échappement produite communiquant avec le cylindre de moteur pendant l'événement de freinage par purge pour commander le niveau de freinage du moteur.

2. Méthode selon la revendication 1, selon laquelle le premier paramètre de moteur comprend la vitesse du moteur.

3. Méthode selon la revendication 1, selon laquelle l'étape de la production d'une pression de gaz d'échappement comprend l'étape qui consiste à commander l'écoulement des gaz d'échappement à travers le turbocompresseur en réaction au niveau du premier paramètre de moteur.

4. Méthode selon la revendication 3, selon laquelle le turbocompresseur comporte un turbocompresseur à géométrie variable (VGT) et l'étape de la commande de l'écoulement des gaz d'échappement à travers le turbocompresseur comprend l'étape qui consiste à doser la géométrie du turbocompresseur jusqu'à une première position.

5. Méthode selon la revendication 4, selon laquelle la première position comprend une position ouverte à moins de 40 %, environ.

6. Méthode selon la revendication 4, selon laquelle la première position comprend une position ouverte à environ 20 %.

7. Méthode selon la revendication 4, selon laquelle la première position comprend une position ouverte de l'ordre de 15 % à 40 % environ.

8. Méthode selon la revendication 4, selon laquelle la première position comprend une position presque entièrement fermée.

9. Méthode selon la revendication 4, comprenant également les étapes qui consistent à :
- prévoir une soupape de régulation de pression accouplée au collecteur d'échappement ;
- commander la soupape de régulation de pression pour modifier un gradient de pression dans le turbocompresseur ; et
- ouvrir la géométrie du turbocompresseur à partir de la première position sans subir d'instabilité de commande dudit turbocompresseur.

10. Méthode selon la revendication 9, selon laquelle la soupape de régulation de pression comporte un clapet de décharge.

11. Méthode selon la revendication 9, selon laquelle la soupape de régulation de pression comporte un étrangleur d'échappement.

12. Méthode selon la revendication 4, comprenant également les étapes qui consistent à :
- prévoir une soupape de régulation de pression accouplée au collecteur d'admission ;
- commander la soupape de régulation de pression pour modifier la pression dans le collecteur d'admission ; et
- ouvrir la géométrie du turbocompresseur à partir de la première position sans subir d'instabilité de commande dudit turbocompresseur.

13. Méthode selon la revendication 1, comprenant également les étapes qui consistent à :
- prévoir une soupape de régulation de pression accouplée à l'un au moins des collecteurs d'échappement et d'admission ;
- déterminer un niveau de second paramètre de moteur ; et si le niveau du second paramètre de moteur dépasse une valeur prédéterminée, commander la soupape de régulation de pression pour réduire la pression dans le collecteur d'échappement.

14. Méthode selon la revendication 13, selon laquelle le second paramètre de moteur comprend la pression du collecteur d'échappement.

15. Méthode selon la revendication 13, selon laquelle le second paramètre de moteur comprend la température du collecteur d'échappement.

16. Méthode selon la revendication 13, selon laquelle le second paramètre de moteur comprend la vitesse du turbocompresseur.

17. Méthode selon la revendication 13, selon laquelle le second paramètre de moteur comprend la pression du cylindre de moteur.

18. Méthode selon la revendication 13, selon laquelle le second paramètre de moteur comprend la température du cylindre de moteur.

19. Méthode selon la revendication 1, comprenant également l'étape qui consiste à produire un événement de remise en circulation des gaz d'échappement en réaction au niveau du premier paramètre de moteur.

20. Méthode selon la revendication 1, selon laquelle l'événement de freinage par purge est choisi dans le groupe événement de freinage.

21. Méthode selon la revendication 1, selon laquelle le moteur a un turbocompresseur à géométrie variable (VGT) relié aux collecteurs d'admission et d'échappement, une soupape de régulation de pression accouplée à l'un au moins des collecteurs d'admission et d'échappement, et un cylindre de moteur, ladite méthode comprenant les étapes qui consistent à :
- activer la ou les soupapes d'échappement pour produire un événement de freinage par purge ;
- déterminer un niveau de premier paramètre de moteur ;
- fermer la géométrie du turbocompresseur jusqu'à une position de freinage pour produire une contre-pression de gaz d'échappement dans le collecteur d'échappement en réaction au niveau du premier paramètre de moteur, la contre-pression de gaz d'échappement produite communiquant avec le cylindre de moteur pendant l'événement de freinage par purge pour commander le niveau du freinage de moteur ;
- déterminer un niveau de second paramètre de moteur ; et
- commander la soupape de régulation de pression en réaction au niveau du second paramètre de moteur.

22. Méthode selon la revendication 21, comprenant également les étapes qui consistent à :
- commander la soupape de régulation de pression pour modifier la pression dans l'un au moins des collecteurs d'échappement et d'admission ; et
- ouvrir la géométrie du turbocompresseur à partir de la première position sans subir d'instabilité de commande du turbocompresseur.

23. Méthode selon la revendication 1 pour commander le freinage d'un moteur comportant dés collecteurs d'admission et d'échappement et au moins une soupape d'admission et d'échappement, comprenant :
- l'actionnement de la ou des soupapes d'échappement du moteur pour produire un événement de freinage par purge ;
- la détermination d'un niveau voulu de freinage de moteur ;
- la commande de la géométrie d'un turbocompresseur à géométrie variable relié aux collecteurs d'admission et d'échappement en réaction au niveau voulu de freinage de moteur ;
- la régulation de la pression de collecteur d'échappement ; et la commande du gradient de pression sur le turbocompresseur à géométrie variable pour éviter une instabilité de commande dudit turbocompresseur.

24. Méthode selon la revendication 23, selon laquelle l'étape qui consiste à déterminer un niveau voulu de freinage de moteur comprend également l'étape qui consiste à mesurer un premier paramètre de moteur.

25. Méthode selon la revendication 24, selon laquelle le premier paramètre de moteur est la vitesse du moteur.

26. Méthode selon la revendication 24, selon laquelle l'étape qui consiste à réguler la pression du collecteur d'échappement comprend également les étapes qui consistent à déterminer si un second paramètre de moteur dépasse une valeur ; et à commander au moins une soupape de régulation de pression pour réguler la pression du collecteur d'échappement.

27. Méthode selon la revendication 26, selon laquelle le second paramètre de moteur est sélectionné dans le groupe comprenant : la pression du collecteur d'échappement, la température du collecteur d'échappement, la vitesse du turbocompresseur, la pression du cylindre de moteur, et la température du cylindre de moteur.

28. Système pour commander le niveau de freinage d'un moteur par purge suivant la méthode selon l'une quelconque des revendications 1 à 27, dans lequel le moteur a au moins une soupape d'admission et d'échappement, des collecteurs d'admission et d'échappement, un turbocompresseur relié auxdits collecteurs et un cylindre de moteur ; et comprenant également :
- des moyens de régulation de pression pour réguler la pression de l'un au moins des collecteurs d'admission et d'échappement ;
- des moyens d'actionnement de soupapes pour actionner l'une au moins des soupapes d'admission et d'échappement pendant un événement de soupape de freinage de moteur par purge ; et
- des moyens de commande pour commander les moyens de régulation de pression et les moyens d'actionnement de soupapes pendant l'événement de soupape de freinage de moteur par purge,
dans lequel l'événement de soupape de freinage de moteur par purge comprend un événement de soupape sélectionné dans le groupe comprenant : un événement de soupape de freinage par purge à cycle total et un événement de soupape de freinage par purge à cycle partiel.

29. Système selon la revendication 28, dans lequel les moyens de régulation de pression comprennent également :
- un turbocompresseur relié aux collecteurs d'admission et d'échappement, le turbocompresseur étant apte à modifier l'écoulement des gaz d'échappement dans le turbocompresseur ; et
- au moins une soupape de régulation de pression accouplée au collecteur d'échappement.

30. Système selon la revendication 29, dans lequel le turbocompresseur est un turbocompresseur à géométrie variable.

31. Système selon la revendication 28, dans lequel les moyens d'actionnement de soupapes comprennent également des moyens pour amorcer une levée de la ou des soupapes du moteur choisies dans le groupe comprenant : des moyens mécaniques, des moyens pneumatiques, des moyens électromagnétiques, des moyens de flottement de soupape, des moyens hydrauliques à haute pression et des moyens hydrauliques à basse pression.

32. Système selon la revendication 28, dans lequel les moyens d'actionnement de soupapes comprennent également des moyens pour maintenir la levée de la ou des soupapes de moteur choisies dans le groupe comprenant : des moyens mécaniques, des moyens hydrauliques à haute pression et des moyens hydrauliques à basse pression.
